# EUROPÄISCHE PATENTSCHRIFT

(11) **EP 1 555 954 B1**
(45) Veröffentlichungstag und Bekanntmachung des Hinweises auf die Patenterteilung: **14.04.2010**
(21) Anmeldenummer: 03778276.0
(22) Anmeldetag: 15.10.2003
(51) Int. Cl.: A61C 17/02, B05B 1/34, F04B 49/12

(54) **MUNDDUSCHE UND SPRÜHDÜSE ZUR ERZEUGUNG EINES FLÜSSIGKEITSSTRAHLS SOWIE ZAHNREINIGUNGSSYSTEM**
MOUTH RINSE AND SPRAY NOZZLE FOR CREATING A LIQUID JET AND TEETH-CLEANING SYSTEM
DOUCHE BUCCALE ET BUSE DE PULVERISATION POUR LA PRODUCTION D'UN JET DE LIQUIDE ET SYSTEME DE NETTOYAGE DE DENTS

(30) Priorität: 17.10.2002 DE 10248336; 17.10.2002 DE 10248338; 17.10.2002 DE 10248339
(43) Veröffentlichungstag der Anmeldung: 27.07.2005
(73) Patentinhaber: Braun GmbH, 61476 Kronberg (DE)
(72) Erfinder: GROMER, Oswald, 89522 Heidenheim (DE); KRAMP, Andreas, 65520 Bad Camberg (DE); SAUER, Michael, 65520 Bad Camberg (DE); STOLPER, Michael, 65760 Eschborn (DE); SCHAEFER, Norbert, 60322 Frankfurt (DE); HERZOG, Karl, 60489 Frankfurt (DE)
(86) Internationale Anmeldenummer: PCT/EP2003/011431
(87) Internationale Veröffentlichungsnummer: WO 2004/034923

(56) Entgegenhaltungen:
- EP-A- 0 066 930
- EP-A- 1 312 418
- DE-A- 2 746 453
- DE-A- 19 959 188
- US-A- 4 770 632
- US-A- 5 711 488

## Beschreibung

Gegenstand der Erfindung ist eine Munddusche, eine Sprühdüse sowie ein Zahnreinigungssystem nach dem Oberbegriff der unabhängigen Ansprüche.

Es ist bekannt, die Reinigungswirkung von Mundduschen zu verbessern, indem spezielle Sprühdüsen zur Erzeugung von Flüssigkeitsstrahlen bestimmter Ausbildung verwendet werden. Unter Sprühdüse im Rahmen dieser Anmeldung kann auch eine Düse zur Abgabe eines nicht aus Einzeltropfen bestehenden Wasserstrahls verstanden werden. Aus der EP 0 841 038 A1 ist bekannt, in der Sprühdüse ein sich um seine Rotationsachse drehendes Schaufelrad anzuordnen, welches durch die dem Schaufelrad zugeführte Reinigungsflüssigkeit in Rotation versetzt wird. Über einen in einem Winkel zur Rotationsachse angeordneten Kanal in dem Schaufelrad gelangt die Reinigungsflüssigkeit zum Auslaß. Infolge der Rotation des Schaufelrads verläßt die Reinigungsflüssigkeit in Form eines rotierenden Flüssigkeitsstrahls den Auslaß der Sprühdüse. Auf diese Weise wird ein Einzelstrahl erzeugt, der gleichmäßig verteilt auf einem sich erweiternden Kegel umläuft. Trotz der vergrößerten Wirkfläche ist die Reinigungswirkung eines mit einer derartigen Sprühdüse erzeugten Flüssigkeitsstrahls noch nicht optimal. Insbesondere die marginale Plaqueentfernung ist mit einer derartigen Sprühdüse nur unzureichend möglich. Lediglich nicht haftende Plaque läßt sich mit dem Flüssigkeitsstrahl einer Munddusche entfernen. Die Plaqueentfernung im approximalen Bereich sowie im Zahnfleischsaum ist nur mit Handzahnbürsten, Zahnseide oder elektrischen Zahnbürsten möglich, wenn auch nicht zufriedenstellend. Ein weiterer Nachteil der Sprühdüse ist das rotierende Schaufelrad, da bewegte Bauteile einem größeren Verschleiß unterliegen. Die mit steigender Lebensdauer verstärkte Abnutzung führt zu einer Vergrößerung der Lagerung, die wiederum eine Reduzierung der Drehzahl bis hin zum Stillstand des Schaufelrades zur Folge haben kann.

Aus der US-A-5 711 488 ist ein Sprühnebeldispenser bekannt, durch den mittels einer Handpumpe eine Flüssigkeit mit einem geringen Druck von etwa 3 bar zu einer Düse gepumpt wird und dann als Sprühnebel aus der Düse austritt.

Aus der EP-A-0 066 930 ist ein Gerät zur Körperpflege bekannt, bei dem Flüssigkeit mit einem niedrigen Druck von etwa 1,5 bis 3,0 bar einer Sprühdüse zugeführt und in einen Sprühnebel umgewandelt wird, um dann als Sprühnebel aus der Düse auszutreten.

Aus der DE 27 46 453 A ist eine Munddusche mit einer Spritzdüse bekannt, die einen gleichmäßigen, in sich homogenen gebündelten Flüssigkeitsstrahl erzeugt, der pulsiert. Es wird keine Angabe über den Druck gemacht, mit dem die Flüssigkeit der Spritzdüse zugeführt wird.

Aus der DE 199 59 188 A1 ist eine Zahnreinigungsvorrichtung ähnlich einer Munddusche bekannt. Zusätzlich zu einer Sprühdüse, aus der eine Reinigungsflüssigkeit austritt, ist ein als löfelartiges Zusatzteil ausgebildeter Reinigungsschaber erforderlich. Für die Flüssigkeit ist ein Druck von 3 bis 6 bar und eine Austrittsgeschwindigkeit von 5 m/s bis 15 m/s vorgesehen. Beschrieben ist, dass höhere Werte vermieden werden sollen, weil dann der Flüssigkeitsstrahl als unangenehm empfunden wird. Diese Werte sollen ein guter Kompromiß zwischen hoher Reinigungswirkung und noch als angenehm empfundener Auftreffintensität sein. Nachteilig ist aber, daß der Schaber nicht in alle Zahnzwischenräume sowie in anderen Zahnbereichen gelangen kann.

Der vorliegenden Erfindung liegt daher die Aufgabe zugrunde, eine Munddusche und eine Sprühdüse für die Munddusche mit verbesserter Reinigungswirkung zu schaffen. Der Flüssigkeitsstrahl soll in der Lage sein, fest haftende Plaque im approximalen Bereich sowie am Zahnfleischsaum zu entfernen. Die Sprühdüse zur Erzeugung eines derartigen Flüssigkeitsstrahls soll möglichst verschleißfrei arbeiteten und einfach aufgebaut sein. Überdies soll eine Vorrichtung für die Sprühdüse geschaffen werden, die eine umfassende Reinigung der Zähne und des Zahnfleisches ermöglicht.

Die Aufgabe wird durch die kennzeichnenden Merkmale der unabhängigen Ansprüche gelöst.

Erfindungsgemäß wird die Reinigungsflüssigkeit einer Sprühdüse mit hohem Druck zugeführt, wobei von einem Düsenauslaß ein Flüssigkeitsstrahl austritt, der eine hohe Geschwindigkeit aufweist und aus mikrofeinen Tropfen besteht. Insbesondere wird von dem Düsenauslaß ein dünner, sich schnell bewegender Flüssigkeitsfilm gebildet, der dann in mikrofeine Tropfen mit hoher Geschwindigkeit übergeht.

Dadurch daß der Druck mindestens 15 bar beträgt und/oder das die Geschwindigkeit mindestens 23 m/s beträgt, wird eine Verbesserung der Reinigungswirkung gegenüber dem Stand der Technik erreicht.

Ein hoher Druck von mindestens 15 bar reicht aus, um eine sichere Bildung der mikrofeinen Tropfen zu ermöglichen, wobei die Geschwindigkeit des Flüssigkeitsstrahls vorzugsweise höher als 25 m/s ist. Eine deutlich bessere Reinigungswirkung wird jedoch bei einem Druck von über 20 bar und/oder eine Geschwindigkeit von über 35 m/s erreicht.

Durch die erfindungsgemäße Lösung kann der Einsatz eines Schabers oder eines anderen Zusatzteiles entfallen. Insbesondere wird die mikrofeine Tropfengröße als relativ angenehm empfunden. Grundsätzlich kann die Munddusche aber in Verbindung mit einem Bürstenteil oder einem anderen Zusatzteil, das die Zähne direkt berührt, gleichzeitig betrieben werden. Das Zusatzteil kann als ein konzentrisch um den Düsenauslaß angeordneter Bürstenkranz ausgebildet sein.

Infolge der hohen Aufprallenergie der Tropfen auf der Plaqueschicht wird die Reinigungsflüssigkeit seitlich weggedrückt. Die dabei erzeugten Scherkräfte reißen die Plaqueoberfläche unter Gruben- und Kraterbildung auf. Da der Flüssigkeitsstrahl aus einer Vielzahl von Tropfen besteht, wiederholt sich dieser Vorgang in schneller Folge. Auf diese Weise wird die Plaqueschicht schichtweise abgetragen. Der Vorteil eines derart erzeugten, aus Tropfen bestehenden Flüssigkeitsstrahls besteht darin, daß nunmehr auch im approximalen Bereich und am Zahnfleischsaum haftende Plaque entfernt werden kann. Des weiteren ist aufgrund der mechanischen Entfernung der Plaqueschicht kein Zusatz für die Reinigungsflüssigkeit notwendig, so daß für die Plaqueentfernung Wasser als Reinigungsflüssigkeit verwendet werden kann.

Zur Erzeugung der Tropfen mit hoher Geschwindigkeit wird die Reinigungsflüssigkeit der Sprühdüse mit hohem Druck zugeführt. In Abhängigkeit der speziellen Ausgestaltung liegt der Druck über etwa 15 bar, insbesondere zwischen etwa 25 bar und 55 bar, wobei sich in einem Druckbereich von 35 bar bis 45 bar die besten Reinigungsergebnisse erzielen lassen.

Zur Erzeugung der Tropfen muß die Reinigungsflüssigkeit zerstäubt oder versprüht werden. Besonders kleine Tropfen lassen sich bei gleichen Düsendurchmessern und Drücken erzeugen, wenn der Flüssigkeitsstrahl als divergierender Hohlkegelstrahl ausgebildet wird. Der divergierende Hohlkegelstrahl hat zudem den Vorteil, daß die Sprühfläche mit wachsendem Abstand vom Düsenauslaß vergrößert wird, was eine schnellere Reinigung ermöglicht. Neben dem Hohlkegelstrahl ist aber auch die Erzeugung eines Vollkegel- oder Flachstrahls denkbar.

Neben der Strahlform ist die Bildung des Strahls bestimmend für die Ausbildung der mikrofeinen Tropfen. Diese lassen sich dadurch erzeugen, daß die Reinigungsflüssigkeit im Düsenauslaß als dünner Film gebildet wird, der gleichmäßig an der Innenwand des Düsenauslasses verteilt ist. Beim Verlassen des Düsenauslasses zerreißt dieser gleichmäßig verteilte Film kurz hinter dem Düsenauslaß in die mikrofeinen Tropfen.

Haftende Plaqueschichten lassen sich besonders gut mit einem aus Tropfen bestehenden Flüssigkeitsstrahl abtragen, dessen Tropfen eine Größe von etwa 5 µm bis 10 µm und eine Geschwindigkeit von mindestens 23m/s, vorzugsweise etwa 45 m/s bis 55 m/s besitzen.

Von Vorteil ist bezüglich einer Sprühdüse zur Erzeugung eines Flüssigkeitsstrahls für eine Munddusche, mit einem Düsenkörper, der eine Kammer aufweist, in die ein Flüssigkeitskanal zur Zufuhr von unter Druck stehender Reinigungsflüssigkeit mündet und von der ein Düsenauslaß zum Austreten eines Reinigungsflüssigkeitsstrahls ausgeht, daß die Kammer mit einer Wirbelkammer etwa runden Querschnitts zum Erzeugen eines umlaufenden Stroms der Reinigungsflüssigkeit verbunden ist, von der zentrisch der Düsenauslaß ausgeht, der aus einer bevorzugt etwa zylindrischen Engstelle und einer optional sich daran anschließenden insbesondere etwa kegelartigen Erweiterung besteht. Gegebenenfalls kann die Erweiterung auch weggelassen werden oder nicht keglig ausgebildet sein.

Diese Gestaltung ermöglicht es, einen Flüssigkeitsstrahl, bestehend aus mikrofeinen Tropfen hoher Geschwindigkeit, zu erzeugen, der aufgrund der Tropfengeschwindigkeit in der Lage ist, Plaque zu entfernen. Eine mit der als Hohlkegeldüse ausgebildete Sprühdüse durchgeführte Reinigung ermöglicht bei gleicher Nutzungsdauer aufgrund einer deutlich geringeren Abrasion der Epithelzellschicht eine schonendere Reinigung als mit einer elektrischen Zahnbürste. Weiterhin ermöglicht die Sprühdüse nach der Verwendung einer elektrischen Zahnbürste insbesondere im approximalen Bereich eine zusätzliche Reduzierung von ca. 60 % Plaque. Die Sprühdüse kommt ohne sich bewegende Bauteile aus, die einem verstärkten Verschleiß unterliegen würden.

Für die Erzeugung der mikrofeinen Tropfen mit hoher Geschwindigkeit hat sich eine Engstelle in Form einer Bohrung mit einem Durchmesser von etwa 0,1 mm bis 0,2 mm und einer Tiefe von etwa 0,05 mm bis 0,2 mm als vorteilhaft herausgestellt. Eine derart ausgebildete Engstelle gewährleistet, daß die aus der Wirbelkammer austretende Reinigungsflüssigkeit mit einem hohem Druck und hoher Geschwindigkeit in die optional nachfolgende Erweiterung eintritt.

Um schließlich den aus vielen Tropfen bestehenden Flüssigkeitsstrahl zu bilden, hat sich eine Erweiterung, insbesondere in Form eines Kegels oder Hohlkegels als günstig erwiesen, wobei die Erweiterung sich der Engstelle anschließt. Mit diesem Zerstäubungsprinzip lassen sich besonders feine Tropfen erzeugen. Nach dem Passieren der Engstelle legt sich Reinigungsflüssigkeit an die Wandung des Hohlkegels als gleichmäßig verteilter dünner Film an, wobei dieser Film aufgrund der Wirbelkammer um die Symmetrieachse der Erweiterung rotiert. Aufgrund der hohen Tangentialgeschwindigkeit zerreißt der Film in die mikrofeinen Tropfen, sobald er den Hohlkegel verläßt, insbesondere kurz hinter dem Düsenaustritt. Für eine optimale Ausbildung der Tropfen hat sich ein Kegel oder Hohlkegel mit einer Länge von etwa 0,2 mm bis 0,5 mm und einem Öffnungswinkel von etwa 20° bis 70° erwiesen. Diese Düsengeometrie zeichnet sich überdies dadurch aus, daß auch bei hohen Tropfengeschwindigkeiten kleine Volumenströme, z.B. von weniger als 80 ml/min, möglich sind, ohne daß die Düsengeometrie so klein wird, daß die Kosten für die Herstellung steigen. Auf diese Weise werden extrem kleine Düsengeometrien, die zudem eine kürzere Lebensdauer besitzen, vermieden. Die als Hohlkegel ausgebildete Düse besitzt zudem den Vorteil, daß sie auch bei Fertigungsungenauigkeiten oder Verunreinigungen ein sehr stabiles Strahlbild aufweist.

Es ist aber auch denkbar, anstelle der Hohlkegeldüse eine Flachstrahldüse oder Vollkegeldüse zu verwenden.

Der Auslaß läßt sich kompakt und somit platzsparend aufbauen, wenn er in einem an dem Düsenkörper angeordneten Düsenaufsatz ausgebildet ist.

Zu einer weiteren Vereinfachung in der Herstellung des Düsenaufsatzes trägt es bei, wenn die Engstelle und die Erweiterung in einem separaten Bauteil, z.B. einer Düsenplatte, angeordnet sind. Die Montage der Düsenplatte im Düsenaufsatz ist nur mit einem geringen Mehraufwand verbunden, während die Fertigung in Bezug auf Genauigkeit, Maßhaltigkeit und Kosten mit einer Düsenplatte günstiger ist. Zudem kann die Düsenplatte aus einem anderen, verschleißbeständigerem Material bestehen.

Der Düsenaufsatz gewährleistet eine Auswechselbarkeit, wenn er mittels einer lösbaren Verbindung mit dem Düsenkörper verbunden ist. Die lösbare Verbindung kann entweder als Schraubverbindung oder als Rast- und Steckverbindung ausgebildet sein. Dadurch läßt sich der Düsenaufsatz beispielsweise bei Beschädigungen auswechseln. Gleichzeitig ermöglicht ein derartig ausgebildeter Düsenkörper die Aufnahme herkömmlicher Düsenaufsätze, die mit einem wesentlich größeren Volumenstrom bei erheblich niedrigerem Druck betrieben werden.

Für die Gestaltung der Wirbelkammer hat sich die Anordnung eines Druckstücks in der Sprühdüse als vorteilhaft erwiesen. Das Druckstück ist in einer Kammer angeordnet, die zwischen dem Düsenaufsatz und dem Düsenkörper gebildet ist. Zur Fixierung des Druckstücks in der Kammer ist der im Düsenkörper oder Düsenaufsatz befindliche Teil des Druckstücks mit einer Preßpassung eingesetzt oder mittels am Düsenaufsatz oder Düsenkörper angeordneten Rastelementen fixiert. Diese Fixierung erleichtert zum einen die Montage und zum anderen ist das Druckstück bei einem Wechsel des Düsenaufsatzes unverlierbar mit einem der beiden Teile verbunden. Es ist aber auch denkbar, das Druckstück aufgrund eines Übermaßes oder mittels einer Feder zwischen Düsenkörper und Düsenaufsatz einzuspannen.

Das Druckstück kann an seinen beiden Enden je ein topfförmiges Teil aufweisen. Das erste topfförmige Teil ist der Engstelle im Düsenaufsatz zugewandt und bildet mit seinem Innenraum die Wirbelkammer. Das zweite topfförmige Teil ist zum Flüssigkeitskanal im Düsenkörper hin ausgerichtet.

In dem ersten topfförmigen Teil ist mindestens eine Öffnung angeordnet, durch die die Reinigungsflüssigkeit aus dem Innenraum des ersten topfförmigen Teils in die Kammer gelangen kann. Ein freies Abfließen der Reinigungsflüssigkeit wird gewährleistet, wenn der Innenraum des topfförmigen Teils über mindestens eine Öffnung, vorzugsweise aber drei bis vier Öffnungen mit der Kammer in Verbindung steht.

Sind die Öffnungen als axiale Schlitze durch das topfförmige Teil gestaltet, so bilden die zwischen den Schlitzen liegenden Bereiche des topfförmigen Teils Federarme, die die Fixierung des Druckstücks unterstützen.

Die Funktion der Federarme wird unterstützt, wenn das Druckstück aus einem elastischen Material, z.B. einem Kunststoff, besteht.

Die Anordnung der Wirbelkammer in dem Druckstück als separates Bauteil gewährleistet eine besonders einfache Herstellung. Gebildet wird die Wirbelkammer von dem Innenraum in dem ersten topfförmigen Teil, das auf den Bereich um die Engstelle aufgesetzt ist, wobei die Engstelle der Auslaß aus der Wirbelkammer ist. Um die Wirbelkammer abzudichten, liegt das topfförmige Teil um die Engstelle auf. Eine besonders gute Dichtwirkung wird erreicht, wenn das topfförmige Teil flächig aufliegt. Diese Art der Abdichtung verhindert Verformungen im Druckstück. Derartige Verformungen könnten bei einer linienförmigen Abdichtung auftreten, wenn das topfförmige Teil mit einer Kante abdichtet.

Darüber hinaus wäre auch eine Ausbildung der Dichtflächen als Konus denkbar. Hierbei muß der Konuswinkel von Düsenplatte und Druckstück exakt übereinstimmen. Dem gegenüber sind zwei plane Flächen kostengünstiger in der Herstellung.

Zur Sicherung der Dichtung können zudem im Bereich um die Engstelle Rasthaken vorgesehen sein, die mit Raststellen am Außenumfang des Druckstücks zusammenwirken. Diese Fixierung bietet zusätzlich den Vorteil, daß bei einem Wechsel der Sprühdüse das Druckstück unverlierbar im Düsenaufsatz gehalten wird.

Der Zugang zur Wirbelkammer wird von mindestens einer senkrecht oder in einem Winkel kleiner 90° zur Symmetrieachse des Druckstücks liegenden Öffnung im ersten topfförmigen Teil gebildet. Es hat sich gezeigt, daß die Strahlausbildung durch die Anzahl, den Querschnitt und die Lage der Öffnungen beeinflußt wird. Gute Ergebnisse wurden mit zwei gegenüberliegenden, als Schlitze ausgebildeten Öffnungen erreicht.

Für die Ausbildung eines ausreichenden Wirbels in der Wirbelkammer münden die Öffnungen etwa quer sowie mit einem Mittenversatz zur Längsachse der Wirbelkammer in die Wirbelkammer ein. Die Größe des Mittenversatzes und der Winkel, unter dem die Öffnungen in die Wirbelkammer münden, sind ebenfalls entscheidend für die Ausbildung des Strahls. So hat sich ein Mittenversatz als günstig herausgestellt, der so groß ist, daß der aus den Öffnungen austretende Flüssigkeitsstrahl auf die gegenüberliegende Wandung der Wirbelkammer unter einem Winkel kleiner als 45° auftrifft. In diesem Winkelbereich kann der Strahl seine Energie am effektivsten auf den sich ausbildenden Wirbel übertragen.

Die Zuführung der Reinigungsflüssigkeit zu den Öffnungen erfolgt über parallel zur Symmetrieachse des Druckstücks verlaufende Nuten in dem ersten topfförmigen Teil. Diese Art der Zuführung vermeidet eine radiale Zuführung, die wiederum einen großen Bauraum beanspruchen würde. Die Sprühdüse kann somit mit einem geringen Durchmesser ausgebildet werden.

Ein Druckstück mit zwei topfförmigen Teilen ist vorteilhaft, wenn der Flüssigkeitskanal auf einer Achse mit der Engstelle liegt. Eine Sprühdüse mit geringerer axialer Erstreckung läßt sich erzielen, wenn der Flüssigkeitskanal etwa radial zur Engstelle ausgerichtet ist. Bei dieser Ausgestaltung kann der dem Flüssigkeitskanal zugewandte Bereich entfallen, wodurch sich das Druckstück im Aufbau vereinfacht.

Bei einer Vorrichtung mit einer elektromotorisch antreibbaren Pumpe und einem Flüssigkeitsbehälter, bei der die Pumpe über einen Schlauch sowie ein Handstück mit einer Sprühdüse verbunden ist, ist vorzugsweise an dem Handstück eine Sprühdüse nach einem der Vorrichtungsansprüche angeordnet.

Ist die Sprühdüse gegen eine andere Düse auswechselbar am Handstück der Vorrichtung angeordnet, so kann die Vorrichtung in unterschiedlichen Betriebsmodi betrieben werden. Neben der erfindungsgemäßen Hochdrucksprühdüse zur Plaqueentfernung gestattet die Auswechselbarkeit z.B. den Einsatz einer herkömmlichen Strahl- und/oder Sprühdüse. Die erfindungsgemäße Sprühdüse wird mit einem hohen Druck bei einem kleinen Volumenstrom und eine normale Mundduschendüse mit einem großen Volumenstrom bei kleinem Druck betrieben. Sofern beide Düsen mit ungefähr der gleichen hydraulischen Leistung betrieben werden, kann die Pumpe von einem Elektromotor angetrieben werden, wobei die Pumpe umschaltbar, z.B. durch ein schaltbares Getriebe, ausgebildet ist.

Das Umschalten zwischen den Betriebsmodi kann ohne zusätzlichen Aufwand oder Vorrichtungen im Handstück erfolgen, wenn der Düsenaufsatz für die Detektion des einzustellenden Betriebsmodus verwendet wird. In Abhängigkeit vom verwendeten Düsenaufsatz baut sich in der Vorrichtung ein bestimmter Druck auf. Dabei kann ein Drucksensor zwischen Pumpe und Sprühdüse zum Erfassen des Drucks der zur Sprühdüse geförderten Reinigungsflüssigkeit angeordnet sein, wobei von dem Drucksensor ein dem erfaßten Druck entsprechendes Signal einer Steuereinheit zuleitbar und von der Steuereinheit der Elektromotor mit dem dem erfaßten Druck zugeordneten Betriebsmodus ansteuerbar ist.

In einer anderen Ausgestaltung wird der Umstand ausgenutzt, daß im Gegensatz zu einer im Mundduschenmodus betriebenen herkömmlichen Strahl- und/oder Sprühdüse der Hochdruckmodus mit der erfindungsgemäßen Sprühdüse ein großes Drehmoment und eine kleine Drehzahl hervorruft. Dabei kann ein Drehzahl- oder Drehmomentsensor an der Pumpe oder an dem Elektromotor zum Erfassen der Drehzahl oder des Drehmoments eines Rotors der Pumpe oder des Elektromotors angeordnet sein, wobei von dem Drehzahl- oder Drehmomentsensor ein der erfaßten Drehzahl oder des erfaßten Drehmoments entsprechendes Signal einer Steuereinheit zuleitbar und von der Steuereinheit der Elektromotor und/oder die Pumpe und/oder das Getriebe mit dem der erfaßten Drehzahl oder des erfaßten Drehmoments zugeordneten Betriebsmodus ansteuerbar sind. Es versteht sich, daß das Drehmoment und/oder die Drehzahl auch über eine Messung des vom Motor aufgenommenen Stroms durchgeführt werden kann. Zusammenfassend ist festzuhalten, daß ein Umschalten zwischen den Betriebsmodi durch eine Druck- oder Stromerfassung durchführbar ist.

Im Folgenden werden besonders vorteilhafte Weiterbildungen der erfindungsgemäßen Munddusche erläutert, durch die die Munddusche in einfacher Weise von der erfindungsgemäßen Betriebsart auf eine andere Betriebsart mit geringerem Druck umschaltbar ist. Hierbei ist vorgesehen daß eine Exzenterwelle bzw. ein Kurbelzapfen in ihrem Exzentergesamtmaß verstellbar an einem Antriebselement angeordnet ist, wobei e i n Kurbeltrieb für eine Pumpe der Munddusche vorgesehen ist und die Munddusche mit einem von einer Antriebseinrichtung um eine Drehachse drehbar antreibbaren Antriebselement und einer um ein Exzentergesamtmaß parallel zur Drehachse an dem Antriebselement angeordneten, als Abtrieb dienenden Exzenterwelle bzw. Kurbelzapfen versehen ist.

Infolge des einstellbaren Exzentergesamtmaßes weist der Abtrieb am Kurbelzapfen mindestens zwei Bewegungen auf. Diese Bewegungen ermöglichen, den Tauchkolben einer Pumpe mit mindestens zwei unterschiedlichen Hüben zu betreiben. Auf diese Weise liefert die Pumpe bei einem kleinen Hub einen geringen Volumenstrom, während bei einem großen Hub die Pumpe einen großen Volumenstrom fördert. Die Verstellung erfolgt durch Drehrichtungsumkehr des Antriebs.

Ist das Antriebselement reversierbar drehbar antreibbar und die Exzenterwelle an einem Abtriebselement angeordnet, das um eine zur Drehachse um eine erste Exzentrizität parallele Schwenkachse zwischen einer ersten und einer zweiten Endstellung frei schwenkbar an dem Antriebselement angeordnet ist, so zeichnet sich die Verstellung der Exzentrizität in Folge einer Drehrichtungsumkehr an der Antriebswelle durch einen besonders geringen mechanischen Aufwand aus, wodurch der Bauraum des Exzenterantriebs nicht wesentlich erhöht wird. Es ist keine zusätzliche Arretierung des eingestellten Exzentergesamtmaßes notwendig, da die Exzentrizität einzig und allein von der Drehrichtung abhängt. Diese Art der Verstellung hat den weiteren Vorteil, daß die Verstellung unter Last, z.B. der Pumpe, erfolgen kann. Eine zusätzliche Verstelleinheit oder ein äußerer Eingriff zum Ändern der Exzentrizität ist nicht erforderlich. Der Exzenterantrieb zeichnet sich zudem durch einen geringen Verschleiß aus, da die Bauteile nur beim Umschalten zwischen den Exzentrizitäten zueinander bewegt werden, wobei das Umschalten in der Regel im entlasteten Zustand erfolgt.

Die Einstellung der Exzentrizität in Abhängigkeit von der Drehrichtung der Antriebswelle gestaltet sich besonders einfach, wenn das Abtriebselement eine Scheibe aufweist, die an dem Antriebselement um die Schwenkachse schwenkbar gelagert ist, wenn die Scheibe einen Kurbelzapfen trägt, der sich mit einer zweiten Exzentrizität parallel zur Schwenkachse erstreckt und wenn das Antriebselement einen axial hervorstehenden Mitnehmer besitzt, der mit dem Antriebselement schwenkbar ist und zwischen zwei die beiden Endstellungen definierenden Anschläge ragt, wobei die Anschläge an der Scheibe angeordnet sind. Der Mitnehmer liegt in Abhängigkeit von der Drehrichtung an dem jeweiligen Anschlag an. Das drehrichtungsabhängige Verdrehen der Scheibe gegenüber dem Antriebselement bewirkt die Vergrößerung bzw. Verkleinerung des Exzentergesamtmaßes des Kurbelzapfens gegenüber dem Antriebselement. Durch gezielte Auswahl der Winkellage der beiden Anschläge zueinander ist nahezu jedes Verhältnis von kleinem zu großem Exzentergesamtmaß realisierbar.

Die Exzentrizitäten der Scheibe und des Kurbelzapfens sind ebenso in weiten Grenzen variierbar, wobei die Exzentrizität der Scheibe kleiner als die des Kurbelzapfens sein sollte. Dadurch ist gewährleistet, daß die Scheibe stets am Mitnehmer anliegt.

Ein größtes und ein kleinstes Exzentergesamtmaß des Kurbelzapfens relativ zur Drehachse des Antriebselements sind mit einem Kurbeltrieb realisierbar, wenn die Anschläge derart angeordnet sind, daß sich die Exzentrizitäten der Scheibe und des Kurbelzapfens addieren oder subtrahieren. Der Winkelabstand der Anschläge an der Scheibe beträgt in diesem Fall 180°. Die Veränderung der Winkellage eines oder beider Abstände führt in Abhängigkeit vom veränderten Anschlag zu einer Verringerung oder Erhöhung eines oder beider Exzentergesamtmaße.

Die Anschläge können in der Scheibe in Form von mindestens einer kreisbogenförmigen, konzentrischen Nut ausgebildet sein, in der der Mitnehmer bewegbar ist. Die Enden der Nut bilden dann die Anschläge für den Mitnehmer in der jeweiligen Drehrichtung. Die Nut erstreckt sich vorzugsweise über einen Winkelbereich von bis zu 180° und kann die Scheibe komplett durchdringen oder nur bis in eine bestimmte Tiefe der Scheibe ausgebildet sein.

Es können in der Scheibe auch zwei oder mehrere derartige symmetrisch angeordnete Nuten ausgebildet sein, in denen jeweils ein Mitnehmer bewegbar angeordnet ist und so eine symmetrische Abstützbelastung erfolgt.

Eine vereinfachte und kostengünstigere Herstellung der Anschläge wird erreicht, wenn diese als Bereiche der Scheibe mit einem größeren Radius angeordnet sind.

Eine besonders gute Führung der Scheibe wird durch die Anordnung von zwei symmetrisch angeordneten Mitnehmern erreicht, die mit ebenfalls symmetrisch an der Scheibe angeordneten Anschlägen zusammenwirken. Mit dem symmetrischen Angriff wird ein Verkanten der Scheibe infolge eines Kippmomentes wirksam vermieden. Die Biege- und Drehmomente sowie die Querkräfte aus der abtriebsseitigen Belastung des Kurbelzapfens werden von den Anschlägen und/oder der Scheibe abgestützt.

Die Mitnehmer lassen sich besonders einfach und damit kostengünstig herstellen, wenn sie als Zapfen an dem Antriebselement angeformt sind.

Die Mitnehmer können aber auch als separate Bauteile, in Form von Bolzen, an dem Antriebselement angeordnet sein. Diese Ausführung hat den Vorteil, daß die Mitnehmer auswechselbar sind.

In einer weiteren Ausgestaltung sind entweder die Anschläge oder die Mitnehmer einstellbar ausgebildet. Die Einstellbarkeit kann beispielsweise drehmomentabhängig sein. Dazu sind die Anschläge mit einer Feder versehen, gegen die die Mitnehmer anliegen. Entsprechend der Größe des von der Antriebseinrichtung erzeugten Drehmoments werden die Anschläge durch die Mitnehmer entlang des Federwegs verschoben, was eine Veränderung der Exzentrizität zur Folge hat. Auf diese Weise ist es möglich, den in Abhängigkeit von der Drehrichtung erzeugten Hub des Pumpenkolbens und damit die Volumenströme und Drücke in Verbindung mit angepaßten Drosseln der geförderten Flüssigkeit besonders fein abzustimmen, bzw. individuell anzupassen. Infolge der Drehmomentabhängigkeit wird die Einstellung des Hubs durch eine Regelung der Antriebseinrichtung möglich.

Es ist aber auch denkbar, die Mitnehmer mittels einer Feder einstellbar zu gestalten und diese gegen feste Anschläge zu bewegen.

Die Feder ist im einfachsten Fall eine Feder, die am jeweiligen Ende der Nut oder am Mitnehmer angeordnet ist. Entsprechend der Federkennlinie der eingesetzten Feder läßt sich die Einstellbarkeit variieren.

Für die Einstellbarkeit in relativ weiten Grenzen haben sich Schraubenfedern, die einen großen Federweg ermöglichen, als günstig erwiesen. Bei großen Drehmomenten oder kleinen Federwegen sind Teller-, Schenkel- oder Blattfedern vorteilhaft.

Für die drehbare Aufnahme der Scheibe ist diese an dem Antriebselement mit einem als separaten Bauteil ausgebildeten Bolzen gelagert. Die Montage des Bolzens kann jedoch entfallen, wenn er entweder an der Scheibe oder an dem Antriebselement angeformt ist.

Für die Aufnahme der Scheibe ist das Antriebselement an einem Ende scheibenförmig ausgebildet. In diesem scheibenförmigen Bereich ist die Scheibe gelagert. Diese Ausgestaltung ist besonders günstig, wenn das Antriebselement aus Kunststoff spritzgegossen ist.

Die Ausbildung des scheibenförmigen Bereichs als separates Bauteil ermöglicht die Schaffung von umschaltbaren Exzenterantrieben, die an verschiedene Anforderungen hinsichtlich Volumenstrom und gegebenenfalls Druck der zu fördernden Flüssigkeit anpaßbar sind. Je nach Anforderung ist der entsprechende scheibenförmige Bereich zu montieren, wobei sich die scheibenförmigen Bereiche lediglich in der Exzentrizität der Lagerung der Scheibe und dementsprechend angeordnete Mitnehmer unterscheiden.

Der scheibenförmige Bereich kann mit mehreren Aufnahmen für die Scheibe und dementsprechend angeordneten Aufnahmen für die Mitnehmer versehen sein, wobei die Aufnahmen der Scheibe unterschiedliche Exzentrizitäten zum Antriebselement aufweisen. Dadurch kann mit einem scheibenförmigen Bereich und der entsprechend ausgewählten Lagerstelle für die Scheibe der Exzenterantrieb bzw. Kurbeltrieb an die jeweiligen Anforderungen angepaßt werden, wodurch eine Reduzierung der Teilevielfalt erreicht wird.

Das Antriebselement kann von einer Antriebseinrichtung über ein Zahnradgetriebe angetrieben werden. Dazu ist ein Zahnrad auf dem Antriebselement befestigt. Die Anordnung des Zahnrades auf dem Antriebselement gestaltet sich konstruktiv einfach, wenn das Zahnrad einteilig mit dem Antriebselement verbunden ist, vorzugsweise mittels Spritzgießen von Kunststoff, oder das Antriebselement bildet. Darüber hinaus führt die Verwendung von Kunststoff zu einer Reduzierung des Gewichts des Exzenterantriebs.

Zur weiteren Vereinfachung des Antriebselements trägt es bei, wenn der scheibenförmige Bereich mit der Lagerung der Scheibe und den Mitnehmern in ein Antriebsrad, insbesondere ein Stirnzahnrad des Antriebselements, integriert ist.

Der Kurbeltrieb besitzt eine kompakte Bauweise, die je nach Anforderung variierbar ist. Für eine axial kurze Bauform ist der Kurbeltrieb scheibenförmig ausgeführt, während er in Zylinderbauform radial klein baut. Mit der Verwendung von scheiben- oder zylinderförmigen Bauteilen werden einfache und damit kostengünstig herzustellende Elemente eingesetzt.

Die Einstellung des Exzentergesamtmaßes zwischen Kurbelzapfen und Antriebselement in Abhängigkeit von der Drehrichtung des Antriebselements wird gemäß einer zweiten Ausführungsform mit einem Kurbelzapfen, der ein Teil einer exzentrisch und drehbar zu dem Antriebselement gelagerten Kurbelwelle ist und von einem an dem Antriebselement angeordneten Mitnehmer, der die Verdrehung der Kurbelwelle zum Antriebselement begrenzt, erreicht. Dadurch wird die Exzentrizität des Kurbelzapfens an der Kurbelwelle der Exzentrizität, die aus der Anordnung der Kurbelwelle zum Antriebselement herrührt, überlagert. Durch Verdrehen der Kurbelwelle zur Antriebswelle läßt sich die Exzentrizität des Kurbelzapfens zur Antriebswelle verändern. Das Verdrehen der Kurbelwelle zum Antriebselement erfolgt bei jedem Ändern der Drehrichtung an dem Antriebselement, wobei sich die Kurbelwelle nur in den Grenzen des Mitnehmers gegenüber dem Antriebselement verdrehen kann.

Die Exzentrizitäten infolge der Anordnung der Kurbelwelle zum Antriebselement und der Ausbildung des Kurbelzapfens an der Kurbelwelle sind in weiten Grenzen variierbar, wobei die Exzentrizität der Kurbelwelle zum Antriebselement bevorzugt kleiner als die des Kurbelzapfens ist. Dadurch ist gewährleistet, daß die Kurbelwange stets am Mitnehmer anliegt.

Bestimmt werden die sich infolge der Drehrichtung einstellenden Exzentrizitäten durch die Anordnung des Mitnehmers an dem Antriebselement. In einer besonders einfachen Gestaltung ist der Mitnehmer ein radial verlaufender Steg, der an der Kurbelwange der Kurbelwelle angreift.

Die Anordnung des Mitnehmers gestaltet sich besonders einfach, wenn er an dem Antriebselement angeformt ist.

Ein größtes und kleinstes Exzentergesamtmaß des Kurbelzapfens zum Antriebselement werden erreicht, wenn die Kurbelwange vom Mitnehmer in einer nach radial außen weisenden Stellung und einer nach radial innen weisenden Stellung mitgenommen wird. In dieser Anordnung liegen die beiden Stellungen und die Lagerstelle der Kurbelwelle auf einer Linie. Der Mitnehmer ist ebenfalls nahezu radial ausgerichtet angeordnet.

Ist die Exzentrizität der Kurbelwelle größer als der durch die angreifenden Kräfte und Momente bedingte Radius des Antriebselements, liegen die Lagerstellen der Kurbelwelle neben dem Antriebselement. Antriebselement und Kurbelwelle müssen daher in geeigneter Weise miteinander verbunden werden. Die dadurch erzeugte Unwucht des Antriebselements wird vermieden, wenn der Radius des Antriebselements so groß gewählt wird, daß die Lagerung der Kurbelwelle innerhalb dieses Radius liegt.

In einer vorteilhaften Ausführungsform der erfindungsgemäßen Munddusche ist vorgesehen, ein Kolben einer Pumpe der Munddusche an zwei Lagerstellen des Pumpengehäuses axial verschiebbar geführt ist, die in einem Abstand voneinander angeordnet sind.

Dadurch werden die Lagerstellen innerhalb des Pumpengehäuses zu den Kolbenenden hin plaziert. Die so erzielte Verkürzung der über die Lagerstellen hinausragenden Bereiche des Kolbens führt infolge der nunmehr geringeren an den Kolbenenden angreifenden Querkräfte zu einer Verringerung der statischen und dynamischen Belastungen der Lagerstellen und des Kolbens.

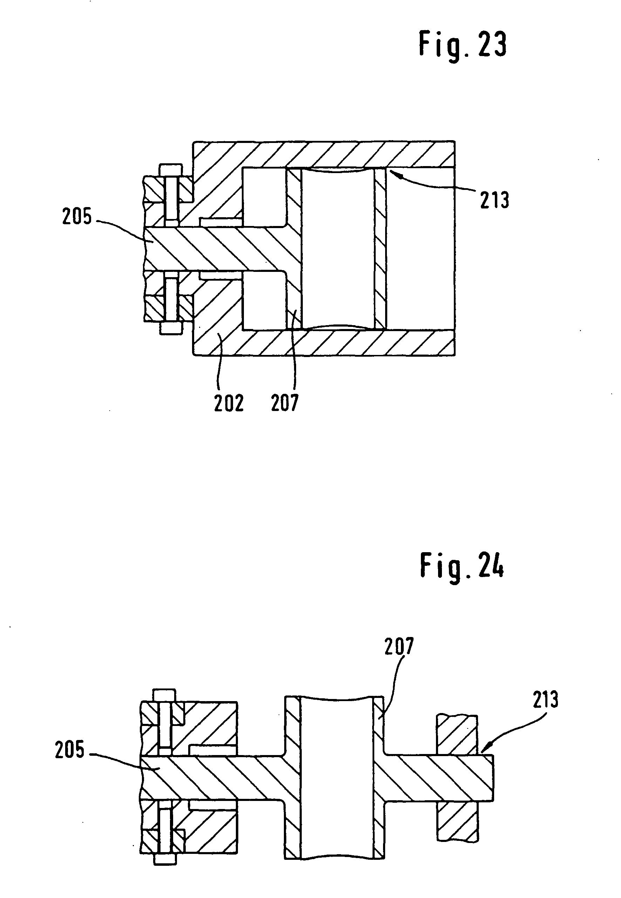

Eine weitere Reduzierung der Belastungen in den Lagerstellen wird erreicht, wenn zumindest eine der Lagerstellen in einem Endbereich des Verschiebewegs des Kolbens in dem Pumpengehäuse angeordnet ist. Dies ermöglicht für diese Lagerstelle eine Momentenreduzierung nahezu auf Null, so daß sich die Belastungen auf einen Kräfteangriff beschränken. Ein besonders geringer Aufwand ergibt sich, wenn die Pumpenkammer als Lagerstelle ausgebildet ist. Es ist auch denkbar, die Lagerstelle an dem Kolbenende einer Kulissenführung zu realisieren. Hierzu ist das Pumpengehäuse dergestalt erweitert, daß bevorzugt die Dekkelflächen der Kulissenführung vom Gehäuse aufgenommen wird. Die Lagerstelle ist gemäß Fig. 23 so ausgebildet, daß sie die Deckelflächen der Kulissenführung als das Kolbenende vollständig aufnimmt, wobei die Lagerstelle eine axiale Erstreckung aufweist, die größer als der Hub des Kolbens ist. Somit ist gewährleistet, daß sich die Deckelflächen der Kulissenführung immer im Bereich der Lagerstelle befindet.

Eine große, die Deckelflächen der Kulissenführung aufnehmende Lagerstelle wird vermieden, wenn die Kulissenführung nicht am Ende der Kolbens, sondern gemäß Fig. 24 zwischen den beiden Enden des Kolbens angeordnet ist. Auf diese Weise kann eine im Durchmesser wesentlich kleinere Lagerstelle ermöglicht werden. Je nach Einsatzzweck sind die etwaig auftretenden ungünstigen Lagerkräfte vernachlässigbar.

Der Kurbelzapfen kann in einem Kulissenstein drehbar gelagert sein, wobei dieser in einer mit dem Kolben verbundenen Kulissenführung quer zur Bewegungsrichtung des Kolbens beweglich angeordnet ist.

Die Aufnahme des Kurbelzapfens in einem Kulissenstein mit Bohrung gewährleistet zum einen eine relativ feste und großflächige Verbindung des bewegten Kurbelzapfens mit einem anderen Bauteil. Auf diese Weise wird die hohe Flächenpressung des Kurbelzapfens gegenüber einem anderen Bauteil verringert. Trotz der immer noch hohen Relativbewegung zwischen Kulissenführung und Kulissenstein wird aufgrund der gegenüber einem Kurbelzapfen sehr großen Fläche die Flächenpressung zum Kolben hin erheblich verringert, was sich positiv auf die Lebensdauer der betreffenden Bauteile auswirkt. Darüber hinaus reduzieren sich auch die Belastungen anderer Bauteile, insbesondere die der Lagerstellen des Kolbens und der Dichtung.

Mit den kleineren Reibkräften und -momenten kann die Motorleistung verringert werden, wodurch die Stromaufnahme der Pumpe reduziert wird, bzw. es kann ein kleinerer Motor verwendet werden. Die verringerte Belastung erlaubt zudem die Ausbildung des Kurbelzapfens mit einem kleineren Durchmesser, was ebenfalls zur Senkung der Reibung beiträgt. Andererseits ermöglicht die flächige Abstützung eine größere Kraftübertragung, so daß eine derart gestaltete Pumpe für höhere Drücke ausgelegt werden kann.

Eine Reduzierung der Belastung wird weiterhin dadurch erreicht, daß Kulissenstein und Kulissenführung aus einer Werkstoffpaarung geringer Reibung bestehen.

Eine weitere Senkung der Flächenpressungen wird dadurch erreicht, daß der Kolben mit dem Kurbelzapfen kardanisch verbunden ist. Dadurch lassen sich insbesondere herstellungsbedingte oder montagebedingte Toleranzen und/oder Verformungen, die zu einer raumschiefen Anordnung der Kurbelzapfens gegenüber dem Kolben führen, ausgleichen.

Eine kardanische bzw. kardanähnliche Anordnung wird konstruktiv besonders einfach erreicht, wenn der Kulissenstein einen zylinderförmigen Querschnitt besitzt und die Kulissenführung als Bohrung mit entsprechendem Querschnitt in einem kolbenfesten Teil ausgebildet und somit der Kulissenstein um seine Längsachse drehbar angeordnet ist. Diese Beweglichkeit erlaubt den Ausgleich der Bewegung um eine Achse. Ein weiterer wesentlicher Vorteil des zylinderförmigen Kulissensteins besteht darin, daß die gesamte Mantelfläche des Kulissensteins mit der Kulissenführung in Kontakt steht. Diese Ausgestaltung zeichnet sich durch eine extrem geringe Flächenpressung aus. Die Bauteile besitzen aufgrund der geringen spezifischen Belastungen eine hohe Lebensdauer.

Neben dem zylinderförmigen Kulissenstein ist auch der Kolben um sein Längsachse drehbar angeordnet. Die Kulissenführung wird damit in die Lage versetzt, eine Ausgleichsbewegung um eine zweite Achse zu vollführen. Somit gewährleistet das Zusammenspiel der Bewegungen von Kulissenstein und Kulissenführung einen Bewegungsausgleich um zwei Achsen, der zum Toleranzausgleich eines raumschief angeordneten Kurbelzapfens notwendig ist.

Zusätzliche Reibung zwischen dem Kurbelzapfen und der Kulissenführung wird vermieden, wenn in der Wand der Kulissenführung ein Langloch zum Durchtritt des Kurbelzapfens ausgebildet ist, das eine größere Breite als der Durchmesser des Kurbelzapfens besitzt. Mit einem derart gestalteten Langloch wird insbesondere bei einem raumschief angeordneten Kurbelzapfen eine unerwünschte Reibung vermieden.

Zur weiteren Senkung der Reibung zwischen Kurbelzapfen und Kulissenstein trägt es bei, wenn der Kurbelzapfen im Kulissenstein in einem Lager drehbar gelagert ist, welches in eine Bohrung des Kulissensteins eingesetzt ist. Das Lager ist vorzugsweise als Gleitlager ausgebildet. Durch geeignete Materialwahl läßt sich die Reibung weiter senken. Neben metallischen Guß- oder Knetlegierungen sind Kunststoffe insbesondere dann von Vorteil, wenn die Anforderungen nicht zu hoch sind. Kunststoffe besitzen gute Gleit- und Notlaufeigenschaften und zeichnen sich durch eine gute Schmierung aus.

Der Exzenterantrieb bzw. Kurbeltrieb kann eine Antriebswelle besitzen und die Exzentrizität des Kurbelzapfens zur Antriebswelle des Exzenterantriebs verstellbar sein. Diese Ausgestaltung ermöglicht ein Umschalten des Kurbelzapfens auf eine andere Exzentrizität, mit der sich ein anderer Kolbenhub realisieren läßt. Dies ermöglicht das Betreiben der Pumpe in zwei Betriebsarten.

Der Pumpeneinlaß und/oder der Pumpenauslaß können axial zur Längserstreckung der Pumpenkammer angeordnet sein.

Es ist aber auch möglich, daß der Pumpeneinlaß und/oder der Pumpenauslaß radial zur Pumpenkammer angeordnet sind, wobei sie radial nebeneinanderliegend angeordnet sein können.

Pumpeneinlaß und Pumpenauslaß können aber auch axial hintereinanderliegend angeordnet sein.

Wenn dabei der Kolben oder die Wand der Pumpenkammer eine Längsnut oder Abflachung besitzt, durch die mindestens einer der Anschlüsse mit der Pumpenkammer verbunden ist, so gewährleistet dies eine Verbindung der Anschlüsse mit der Pumpenkammer, die unabhängig von der Lage des Kolbens ist.

In den Anschlüssen angeordnete Rückschlagventile gewährleisten das Verschließen des Pumpeneinlasses und Pumpenauslasses in Abhängigkeit von der Bewegung des Kolbens.

Die Dichtung kann den Kolben radial umschließend zwischen den Lagerstellen des Kolbens angeordnet sein. Durch diese Entkopplung von Lagerstelle und Dichtung wird der direkte Eintrag von Verschleißpartikeln stark herabgesetzt. Dies führt zu einer erheblichen Reduzierung des Verschleißes an der Dichtung. Dieser geringere Verschleiß führt zu einer verlängerten Lebensdauer der Dichtung, ohne daß es zu einem Druckabbau in der Pumpenkammer kommt.

Die Dichtung ist besonders geringen Belastungen ausgesetzt, wenn sie mittig zwischen den Lagerstellen angeordnet ist. Insbesondere bei einer außermittigen Lage des Kulissensteins zur Kolbenachse wird die Dichtung durch Kippmomente nur gering radial belastet.

Eine weitere Verringerung des Eintrags von Verschleißpartikeln aus den Lagerstellen wird erreicht, wenn der Kolben im Bereich zwischen den Lagerstellen einen größeren oder kleineren Durchmesser aufweist als im Bereich der Lagerstellen.

Eine Möglichkeit zur Anordnung der Dichtung besteht darin, daß die Dichtung im Pumpengehäuse fest angeordnet ist und eine Dichtlippe aufweist, die an dem Kolben diesen radial umschließend dichtend in Anlage ist.

Dadurch wird eine Schwächung des Kolbendurchmessers durch eine umlaufende Nut vermieden. In dieser Ausgestaltung kann aufgrund des Wegfalls der umlaufenden Nut, der Kolben mit einem geringeren Durchmesser dimensioniert werden. Das ermöglicht eine Reduzierung des benötigten Bauraums und der oszillierend bewegten Massen.

An verschiedenen Ausführungsbeispielen wird die Erfindung näher erläutert. Dabei zeigen
- Figur 1:: einen Schnitt durch eine erste Ausführungsform einer Sprühdüse,
- Figur 2:: eine vergrößerte Darstellung der Düsenplatte nach Figur 1,
- Figur 3:: eine perspektivische Darstellung des Druckstücks nach Figur 1,
- Figur 4:: eine Draufsicht auf die Wirbelkammer nach Figur 1,
- Figur 5:: einen Schnitt durch eine zweite Ausführungsform einer Sprühdüse,
- Figur 6:: einen Schnitt durch eine dritte Ausführungsform einer Sprühdüse,
- Figur 7:: eine Vorrichtung mit einer Sprühdüse.
- Figur. 8:: einen Schnitt durch eine erste Ausführungsform eines Exzenterantriebs bzw. Kurbeltriebs der erfindungsgemäßen Mundusche in der Ebene I-I der Fig. 9,
- Figur 9:: einen Schnitt des Exzenterantriebs nach Figur 8 in der Ebene II-II,
- Figur 10:: den Exzenterantrieb nach Figur 8 in geänderter Drehrichtung, IN DER Ebene IV-IV der Fig. 11,
- Figur 11:: einen Schnitt des Exzenterantriebs nach Figur 10 in der Ebene III-III,
- Figur 12:: eine perspektivische Darstellung des Exzenterantriebs ähnlich zu Figur 8 mit zwei Mitnehmern,
- Figur 13:: ein Stirnzahnrad und eine Scheibe des Exzenterantriebs,
- Figur 14:: einen Kurbeltrieb mit variablen Anschlägen,
- Figur 15:: einen Schnitt durch eine zweite Ausführungsform eines Kurbeltriebs bzw. Exzenterantriebs in der Ebene VIII-VIII der Fig. 16,
- Figur 16:: einen Schnitt des Exzenterantriebs nach Figur 15 in der Ebene IX-IX,
- Figur 17:: einen Schnitt durch den Exzenterantrieb nach Figur 15 in geänderter Drehrichtung in der Ebene X-X der Fig. 18,
- Figur 18:: einen Schnitt des Exzenterantriebs nach Figur 17 in der Ebene XI-XI,
- Figur 19:: eine perspektivische Darstellung eines ersten Ausführungsbeispiels einer Tauchkolbenpumpe,
- Figur 20:: eine Schnittdarstellung der Tauchkolbenpumpe nach Figur 19,
- Figur 21:: einen Schnitt der Tauchkolbenpumpe nach Figur 19 im Bereich des Exzenterantriebs,
- Figur 22:: einen Schnitt eines zweiten Ausführungsbeispiels einer Tauchkolbenpumpe im Bereich der Pumpenkammer, wobei die Anordnung von Kolben und Kurbel gegenüber Fig. 19 vertauscht ist,
- Figur 23:: in schematischer Teil-Darstellung geschnitten ein Ausführungsbeispiel der Anordnung einer möglichen Lagerstelle und
- Figur 24:: in schematischer Teil-Darstellung geschnitten ein weiteres Ausführungsbeispiel der Anordnung einer möglichen Lagerstelle,
- Figur 25:: eine weitere Darstellung einer Sprühdüse,
- Figur 26:: eine Darstellung von Zonen eines Zahnes,
- Figur 27:: eine Darstellung eines auf Plaque auftreffenden Tropfens,
- Figur 28:: eine Darstellung gemäß 28, jedoch bei einem späteren Zeitpunkt,
- Figur 29:: eine Darstellung gemäß 28, jedoch nach entferntem Plaque,
- Fig. 30:: eine Perspektivansicht einer Sprühdüse,
- Fig. 31:: eine Perspektivansicht einer anderen Ausführungsform einer Sprühdüse,
- Fig. 32:: eine Perspektivansicht einer weiteren Ausführungsform einer Sprühdüse,
- Fig. 33:: eine Seitenansicht eines Bürstenelementes und
- Fig. 34:: eine Frontansicht des Bürstenelementes.

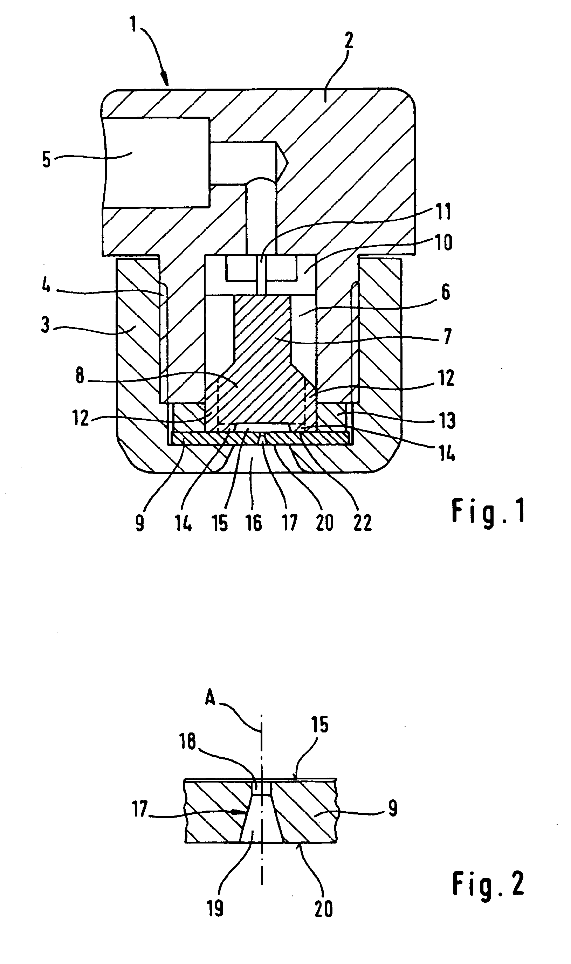

Die in Figur 1 gezeigte Sprühdüse 1 besteht aus einem Düsenkörper 2, der mit einem Düsenaufsatz 3 mittels einer Schraubverbindung 4 verbunden ist. In dem Düsenkörper 2 ist ein Flüssigkeitskanäle 5 für die Reinigungsflüssigkeit angeordnet.

Der Düsenkörper 2 bildet zusammen mit dem Düsenaufsatz 3 eine Kammer 6, in die der Flüssigkeitskanal 5 mündet. In dieser Kammer 6 ist ein Druckstück 7 eingesetzt.

Das Druckstück 7 ist an seinen beiden Enden radial erweitert topfförmig ausgebildet. Mit dem ersten topfförmigen Teil 8 sitzt das Druckstück 7 auf einer Düsenplatte 9 auf. Das zweite topfförmige Teil 10 umgibt den Bereich, in dem der Flüssigkeitskanal 5 in die Kammer 6 einmündet.

Das zweite topfförmige Teil 10 verfügt über vier gleichmäßig verteilte axiale Schlitze 11, durch die im Flüssigkeitskanal 5 zugeförderte Reinigungsflüssigkeit in die Kammer 6 strömen kann.

Das erste topfförmige Teil 8 besitzt zwei axial am Umfang des Druckstücks 7 ausgebildete Nuten 12. Im Bereich der Nuten 12 ist das topfförmige Teil 8 von einem Ring 13 umgeben. Dieser aus Polyamid bestehende Ring 13 dichtet den Umfang des topfförmigen Teils 8 ab, so daß die Nuten 12 als Kanäle wirken. Am unteren Ende der Nuten 12 schließen sich radial dazu verlaufende, als Schlitze ausgeformte Kanäle 14 an, die sich annähernd tangential bis in eine Wirbelkammer 15 erstrecken.

Die Wirbelkammer 15 wird durch den Innenraum des ersten topfförmigen Teils 8 und die Düsenplatte 9 gebildet. Gleichzeitig verschließt die Düsenplatte 9 eine Öffnung 16 im Düsenaufsatz 3.

Die Düsenplatte 9 verfügt ihrerseits über einen Durchgang 17, durch den die Reinigungsflüssigkeit aus der Wirbelkammer 15 austritt.

In Figur 2 ist der Durchgang 17 der Düsenplatte 9 vergrößert dargestellt. Der Durchgang besteht aus einer Bohrung 18, die den Auslaß aus der Wirbelkammer 15 bildet. Die Bohrung 18 hat einen Durchmesser von z.B. 0,15 mm und eine Länge von z.B. 0,11 mm.

An die Bohrung 18 schließt sich ein divergierender Hohlkegel 19 an. Der Hohlkegel 19 weist einen Öffnungswinkel von z.B. 30° bei einer Länge von z.B. 0,35 mm auf.

Die in der Wirbelkammer 15 durch die annähernd tangentialen Kanäle 14 in Rotation versetzte Reinigungsflüssigkeit wird aufgrund des geringen Durchmessers der Bohrung 18 in dieser wirbelnd stark beschleunigt. Die Reinigungsflüssigkeit tritt sodann in den Hohlkegel 19 ein. Im Hohlkegel 19 bildet sich die Reinigungsflüssigkeit aufgrund der Wirbelbewegung und der Dekompression als gleichmäßig verteilter dünner Film auf der Wandung des Hohlkegels 19 aus. Gleichzeitig rotiert der Film um die Achse A mit hoher Geschwindigkeit. Erreicht die sich so bewegende Reinigungsflüssigkeit die Kante 20, zerreißt der Film in eine Vielzahl von Tropfen mit einer mittleren Größe von etwa 10 µm, die sich mit einer Geschwindigkeit von etwa 50 m/s bewegen. Die Tropfen in ihrer Gesamtheit bilden dabei einen Hohlkegel.

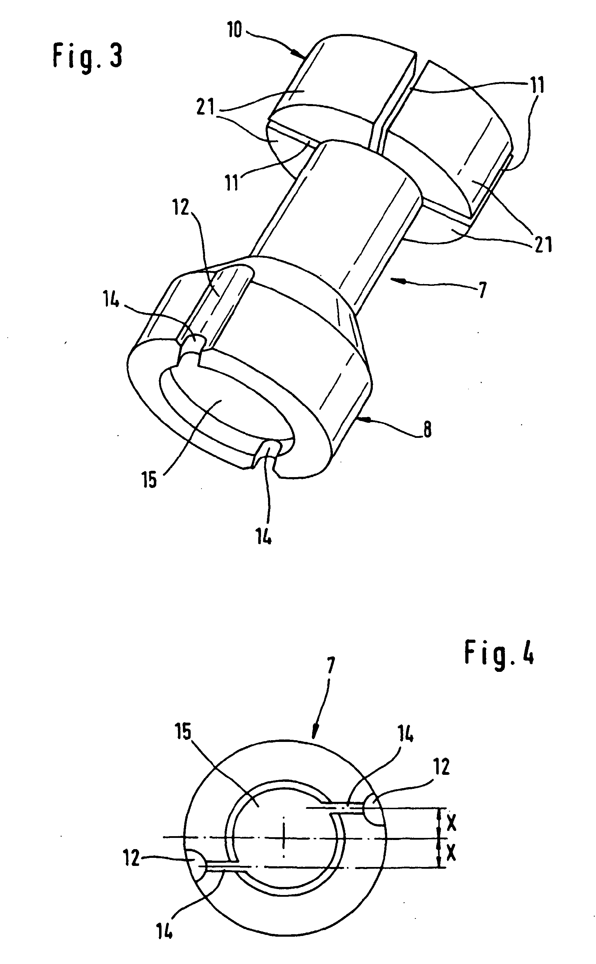

Das Druckstück 7 in Figur 3 zeigt die beiden topfförmigen Teile 8, 10. Das zweite topfförmige Teil 10 ist durch vier gleichmäßig am Umfang verteilte Schlitze 11 in vier Bereiche unterteilt. Aufgrund ihrer Form wirken diese Bereiche als Federarme 21. Die Federarme 21 stützen sich an dem Düsenkörper 2 ab, so daß das erste topfförmige Teil 8 mit der Fläche 22 gegen die Düsenplatte 9 gepreßt wird.

Am Umfang des ersten topfförmigen Teils 8 sind die zwei Nuten 12 angeordnet. An die Nuten 12 schließt sich je ein Kanal 14 an, annähernd tangential die direkt in die Wirbelkammer 15 münden. Über die Nuten 12 und die Kanäle 14 strömt die Reinigungsflüssigkeit von der Kammer 6 zur Wirbelkammer 15.

Die Lage der Kanäle 14 zur Wirbelkammer 15 ist der Figur 4 entnehmbar. Die Kanäle 14 führen von den Nuten 12 nicht radial zum Zentrum, sondern verlaufen gegenläufig parallel zueinander und treten mit einem Mittenversatz X in die Wirbelkammer 15 ein. Der Mittenversatz ist so gewählt, daß ein ungestört in die Wirbelkammer 15 eintretender Strahl an der Wandung der Wirbelkammer in einem Winkel von kleiner 45° auftrifft und an der Wandung in eine umlaufende Strömung umgeleitet wird.

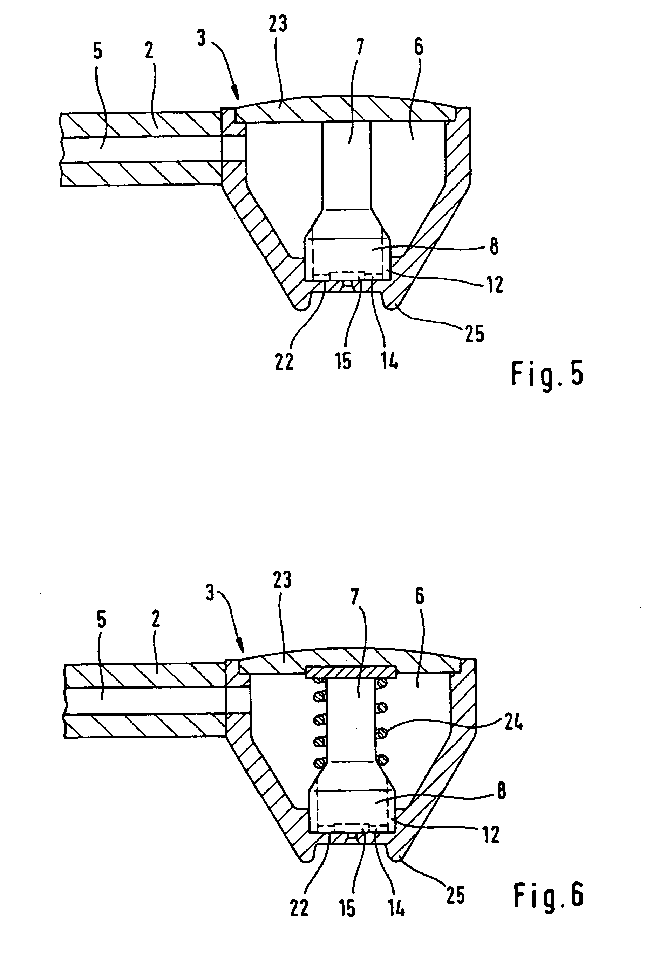

Die Figuren 5 und 6 zeigen eine zweite Ausführungsform der Sprühdüse 1. Der Düsenkörper 2 ist in bezug auf die Symmetrieachse des Düsenaufsatzes 3 nicht radial sondern bevorzugt annähernd tangential an dem Düsenaufsatz 3 angeordnet. Dadurch mündet der Flüssigkeitskanal 5 ebenfalls seitlich in die Kammer 6. Die Kammer 6 ist mit einem Deckel 23 verschlossen.

Das Druckstück 7 ist dahingehend vereinfacht, daß kein zweites topfförmiges Teil notwendig ist. Die Wirbelkammer 15 ist wiederum im ersten topfförmigen Teil 8 angeordnet. In Figur 5 stützt sich das Druckstück 7 am Deckel 23 ab, so daß die Fläche 22 dichtend auf dem Düsenaufsatz 3 aufliegt. In Figur 6 wird die Dichtwirkung der Fläche 22 durch eine Feder 24 unterstützt, die das Druckstück 7 gegen den Düsenaufsatz 3 preßt.

Über Nuten 12 und Schlitze 14, die ähnlich wie in den Figuren 1 bis 4 angeordnet sind, gelangt die Reinigungsflüssigkeit wiederum in die Wirbelkammer 15. Im Gegensatz zur Figur 1 besitzen die Sprühdüsen 1 in Figur 5 und 6 keine Düsenplatte. Die Bohrung 18 und der Hohlkegel 19 sind im Düsenaufsatz 3 angeordnet. Am Düsenaufsatz 3 sind um den austretenden Strahl herum mehrere Anformungen 25 vorhanden. Die Anformungen 25 haben eine axiale Erstreckung von etwa 3 mm. Die Anformungen 25 dienen der Einstellung eines optimalen Arbeitsabstandes, indem die Sprühdüse 1 mit den Anformungen 25 auf die zu reinigenden Bereiche aufgesetzt wird.

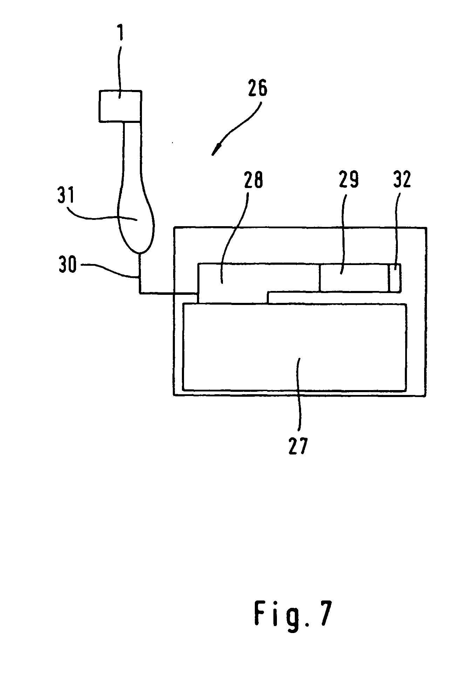

Die Vorrichtung 26 in Figur 7 umfaßt einen Flüssigkeitsbehälter 27, der vom Benutzer mit Reinigungsflüssigkeit gefüllt werden kann. Aus diesem Flüssigkeitsbehälter 27 wird die Reinigungsflüssigkeit mittels einer Pumpe 28, die von einem Elektromotor 29 angetrieben wird, über einen Schlauch 30 zu einem Handstück 31 gefördert. An dem Handstück 31 ist die Sprühdüse 1 auswechselbar angeordnet. An dem Elektromotor 29 ist ein Sensor 32 angeordnet, der das vom Elektromotor 29 erzeugte Drehmoment mißt und danach ein Signal an die Pumpe 28 liefert, damit diese in dem Betriebsmodus betrieben werden kann, welcher der verwendeten Sprühdüse entspricht.

Wird die erfindungsgemäße Sprühdüse 1 verwendet, so erzeugt die Pumpe 28 im Hochdruckmodus einen Volumenstrom von 50 ml/min bei ungefähr 40 bar. Das entspricht in etwa einer mechanischen bzw. hydraulischen Leistung von ca. 2000 ml/min bar oder ca. 3,3 W. Ist eine herkömmliche Sprühdüse am Handstück 31 angeordnet, erkennt der Sensor 32 das gegenüber der erfindungsgemäßen Sprühdüse 1 geänderte Drehmoment und die Pumpe 28 wird im Mundduschenmodus betrieben. Dabei liefert die Pumpe 28 einen Volumenstrom von zirka 300 ml/min mit einem Druck von 6 bar. Daraus ergibt sich eine mechanische bzw. hydraulische Leistung von etwa 1800 ml/min bar oder 3,0 W. Aufgrund der annähernd gleichen mechanischen Leistung in beiden Betriebsmodi ist die Vorrichtung 26 mit einer Pumpe 28 und einem Elektromotor 29 betreibbar.

### Beschreibung des Kurbelbetriebs für die Munddusche

Der nachfolgend beschriebene Exzenterantrieb weist mindestens zwei unterschiedliche Bewegungen am Abtrieb auf. Die unterschiedlichen Bewegungen am Abtrieb sind mit minimalen Aufwand einstellbar. Das Verstellen ist darüber hinaus ohne einen äußeren Eingriff in den Antrieb möglicht. Der Bauraum des Exzenterantriebs ist dabei nicht wesentlich größer.

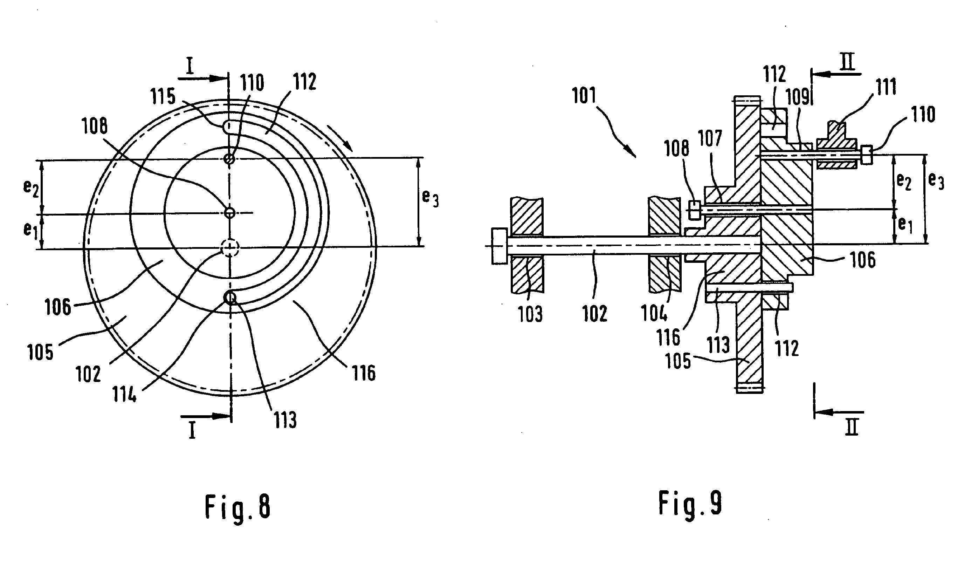

Der Exzenterantrieb 101 in Figur 8 besitzt ein Antriebselement 102, das als eine Antriebswelle ausgebildet und in zwei Lagerstellen 103, 104 gelagert ist. An einem Ende der Antriebswelle ist ein Stirnzahnrad 105 befestigt. Das Stirnzahnrad 105 ist mit einer nicht dargestellten Antriebseinrichtung verbunden und dient zum Antrieb der Antriebswelle. Ein scheibenförmiger Bereich 116 zur Aufnahme einer Scheibe 106 ist in das Stirnzahnrad 105 integriert. Dazu weist das Stirnzahnrad 105 eine mit einer Exzentrizität e1 angeordnete Bohrung 107 auf. Mit einem Stift 108 ist die Scheibe 106 in der Bohrung 107 drehbar gelagert. Die Scheibe 106 besitzt eine mit einer Exzentrizität e2 angeordnete Bohrung 109, in der ein als Abtrieb dienender Kurbelzapfen 110 eingesetzt ist. An dem Kurbelzapfen 110 greift ein Pleuel 111 an, welches den nicht dargestellten Kolben einer Pumpe antreibt. Die Scheibe 106 besitzt eine Nut 112, in die ein als Bolzen ausgebildeter Mitnehmer 113 eingreift, welcher im Stirnzahnrad 105 befestigt ist.

In der in Figur 8 gezeigten Darstellung sind die Scheibe 106 und der Kurbelzapfen 110 derart angeordnet, daß die Exzentrizitäten der Scheibe e1 und des Kurbelzapfens e2 in einer Linie ausgerichtet sind. In dieser Lage addieren sich die Exzentrizitäten e1 und e2 zum größten Exzentergesamtmaß e3. Der Kurbelzapfen 110 überträgt auf das Pleuel 111 einen Hub, der dem doppelten Exzentergesamtmaß e3 entspricht.

Figur 9 zeigt das Stirnzahnrad 105 mit der exzentrisch daran angeordneten Scheibe 106 und dem exzentrisch zur Scheibe 106 angeordneten Kurbelzapfen 110. In die kreisbogenförmige Nut 112 der Scheibe 106 greift der am Stirnzahnrad 105 befestigte Mitnehmer 113 ein. Die Nut 112 erstreckt sich über 180°. Die Enden 114, 115 bilden die Anschläge für den Mitnehmer 113. Das größte Exzentergesamtmaß e3 stellt sich ein, wenn das Stirnzahnrad 105 in der gezeigten Drehrichtung angetrieben wird. Der Mitnehmer 113 läuft in der Nut 112 der Scheibe 106 bis zum Anschlag 114. Liegt der Mitnehmer 113 am Anschlag 114 an, rotiert die Scheibe 106 und damit der Kurbelzapfen 110 mit dem Stirnzahnrad 105 in der gezeigten Drehrichtung.

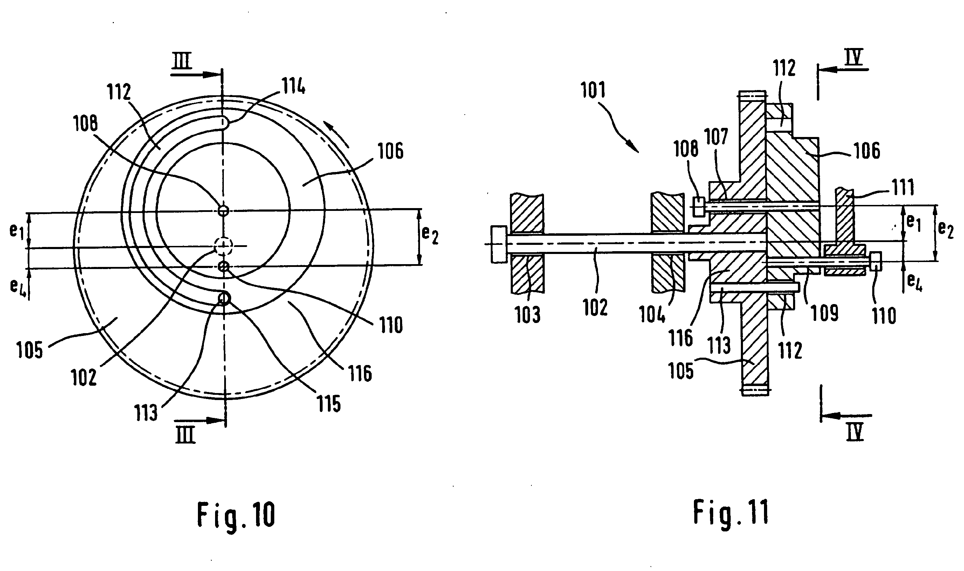

Die Figuren 10 und 11 zeigen eine geänderte Stellung des Kurbeltriebs 101 nach Figur 8 und 9, wobei das Stirnzahnrad 105 in entgegengesetzter Drehrichtung angetrieben wird. Die Antriebswelle besitzt an ihrem der Scheibe 106 zugewandten Ende einen scheibenförmigen Bereich 116, der zur Aufnahme der Scheibe 106 ausgebildet ist. Am Umfang des scheibenförmigen Bereichs 116 ist das Stirnzahnrad 105 angeordnet.

Beim Umschalten in die dargestellte Drehrichtung setzt das Pleuel 111 ein Bremsmoment entgegen, so daß der Kurbelzapfen 110 und damit die Scheibe 106 in ihrer Lage verharren. Der im Stirnzahnrad 5 angeordnete Mitnehmer 13 läuft nun vom Anschlag 114 in der Nut 112 zum Anschlag 115, so daß sich das Stirnzahnrad 105 gegenüber der Scheibe 106 um 180° verdreht. Sobald der Mitnehmer 113 den Anschlag 115 erreicht, wird die Scheibe 106 vom Mitnehmer 113 mitgenommen. Das Stirnzahnrad 105 und die Scheibe 106 rotieren wieder mit gleicher Drehzahl.

Infolge des Verdrehens des Stirnzahnrades 105 zur Scheibe 106 um 180° wirkt die Exzentrizität e2 des Kurbelzapfens 110 der Exzentrizität e1 der Scheibe 106 entgegen. Es stellt sich das kleinste Exzentergesamtmaß e4 ein. Der Kurbelzapfen 110 überträgt auf das Pleuel 111 nunmehr nur noch einen Hub, der dem Doppelten des kleinsten Exzentergesamtmaßes e4 entspricht.

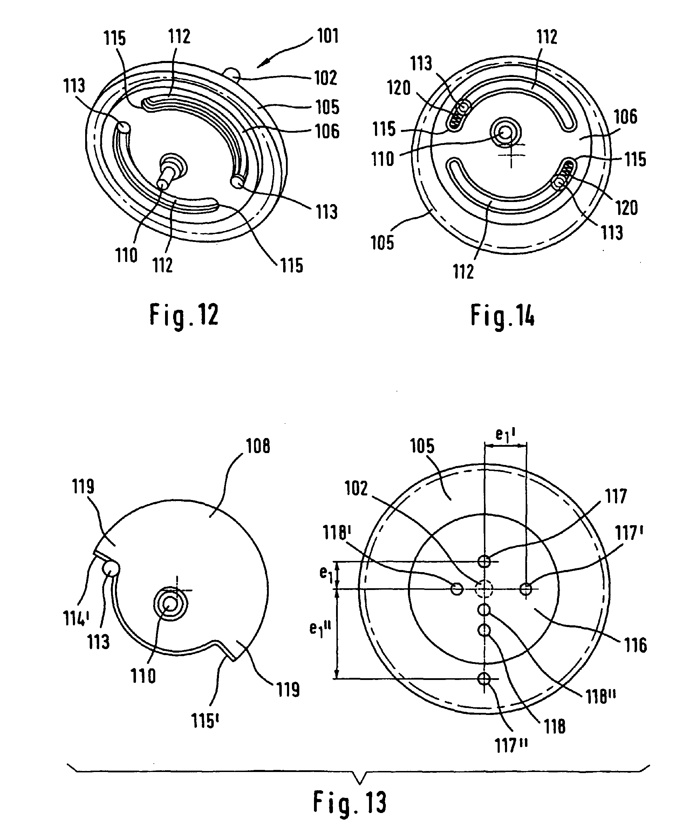

Der Kurbeltrieb 101 in Figur 12 zeigt einen gegenüber Figur 8 leicht abgewandelten Exzenterantrieb 101, wobei der Zahnkranz des Stirnzahnrads 105 als Strichpunktlinie dargestellt ist. Das Stirnzahnrad 105 besitzt zwei symmetrisch angeordnete Mitnehmer 113, die in zwei konzentrisch angeordneten kreisbogenförmigen Nuten 112 der Scheibe 106 laufen. Die Enden der Nuten 114, 115 bilden die Anschläge für die Mitnehmer 113.

Der in Figur 106 gezeigte Exzenterantrieb 101 besitzt ein Stirnzahnrad 105, dessen Zahnkranz als Strichpunktlinie dargestellt ist. Das Stirnzahnrad 105 besitzt mehrere Bohrungen 117, 117', 117". Diese Bohrungen 117, 117', 117" dienen der Aufnahme der Scheibe 106, wobei die Bohrungen 117, 117', 117" unterschiedliche Exzentrizitäten e1, e1', e1" besitzen. Das Stirnzahnrad 105 kann somit für verschiedene Anforderungen verwendet werden, indem die Scheibe 106 in der entsprechenden Bohrung 117, 117', 117" montiert wird. Den Bohrungen 117, 117', 117" sind entsprechende Bohrungen 118, 118', 118" zugeordnet, in denen der Mitnehmer 113 angeordnet ist.

Die Scheibe 106 besitzt wiederum Anschläge 114', 115', die jedoch nicht in der Scheibe 106 als Nuten 112, sondern als Bereiche 119 mit einem größeren Radius am Umfang der Scheibe 106 angeordnet sind.

Die Scheibe 106 gemäß Figur 14 besitzt zwei konzentrisch angeordnete Nuten 112, in denen zwei Mitnehmer 113 laufen. An den Enden der Nuten 112 ist jeweils eine Schraubenfeder 120 so angeordnet, daß in Abhängigkeit von der Drehrichtung der Antriebswelle jeder Mitnehmer 113 an einer Schraubenfeder 120 anliegt und die Scheibe 106 mit der Drehzahl der Antriebswelle rotiert. Die Schraubenfedern 120 bewirken, daß die Mitnehmer 113 nicht ganz am Ende der jeweiligen Nut 112 anliegen. Dadurch liegt der Kurbelzapfen 110 nicht mehr auf einer Linie mit dem Zentrum der Scheibe 106 und der Antriebswelle, und die Exzentrizität e1 addiert sich nur noch zum Teil zur Exzentrizität e1 der Scheibe 106. Das sich daraus ergebende größte Exzentergesamtmaß e3 ist somit kleiner. Zusätzlich werden Stöße beim Umschalten der Drehrichtung gedämpft.

Die Schraubenfedern 120 sind bezüglich ihrer Federkennlinie so gestaltet, daß bereits geringe Änderungen des von der Antriebseinrichtung erzeugten Drehmomentes ausreichen, um über die das Drehmoment übertragenden Mitnehmer 113 den Federweg zu ändern. Mit Änderungen des Federwegs verdreht sich die Scheibe 106 zur Antriebswelle, was zu geringfügigen Änderungen der Lage des Kurbelzapfens 110 und damit des Exzentergesamtmaßes e3, e4 führt. Auf diese Weise kann durch eine Drehmomentenregelung an der Antriebseinrichtung oder der Antriebswelle eine Feineinstellung des Exzentergesamtmaßes e3, e4 und damit des Hubs des Pleuels erfolgen.

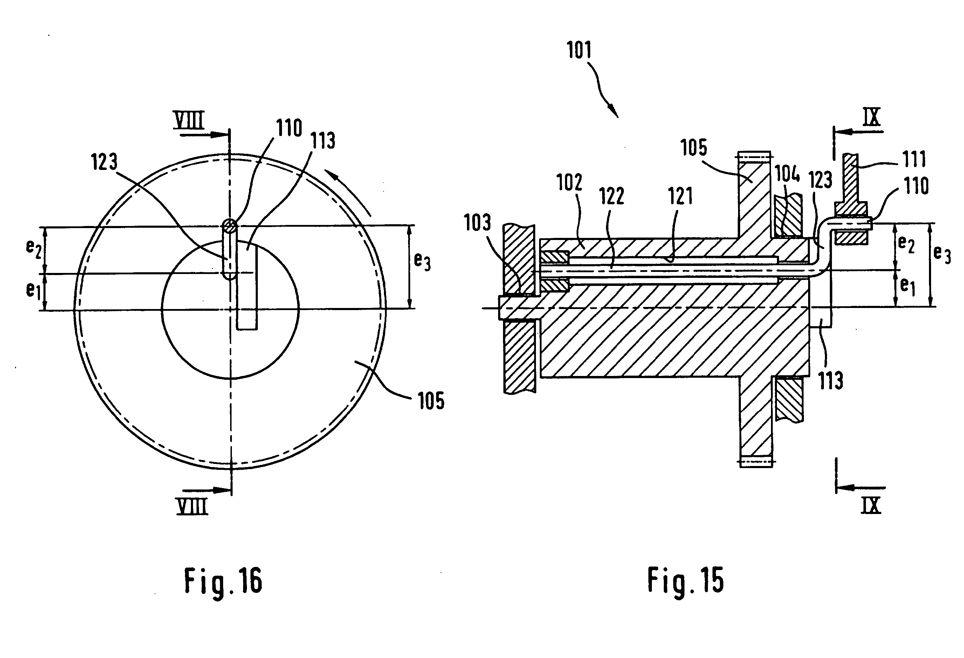

In einer zweiten Ausführungsform des Exzenterantriebs 101 in Figur 15 ist das Stirnzahnrad 105 und die Antriebswelle einteilig als Antriebselement 102 ausgebildet. Die Antriebswelle ist in den Lagerstellen 103, 104 drehbar gelagert. Die Antriebswelle weist eine Bohrung 121 auf, in der eine Kurbelwelle 122 gelagert ist. Die Kurbelwelle 122 ist mit einer Exzentrizität e1 in der Antriebswelle angeordnet. Der Kurbelzapfen 110, der über eine Kurbelwange 123 mit der Kurbelwelle 122 verbunden ist, weist gegenüber der Kurbelwelle 122 eine Exzentrizität e2 auf. An dem Kurbelzapfen 110 ist das Pleuel 111 befestigt.

In der gezeigten Darstellung ist die Kurbelwelle 122 derart angeordnet, daß der Kurbelzapfen 110 in Bezug auf die Lagerstelle der Kurbelwelle 122 radial nach außen weisend ausgerichtet ist. In dieser Position addieren sich die Exzentrizitäten e1, e2 der Kurbelwelle 122 und des Kurbelzapfens 110 zum größten Exzentergesamtmaß e3. Der Kurbelzapfen 110 überträgt auf das Pleuel 111 einen Hub, der dem doppelten Exzentergesamtmaß e3 entspricht.

In dem in Figur 16 gezeigten Schnitt des Exzenterantriebs 101 wird das Antriebselement 102 über das Stirnzahnrad 105 in der gezeigten Drehrichtung von der nicht dargestellten Antriebseinrichtung angetrieben. Ein an dem Antriebselement 102 angeformter Mitnehmer 113 ist so angeordnet, daß er die Kurbelwelle 122 in der in Figur 15 gezeigten Position mitnimmt.

Die Figuren 110 und 111 zeigen die Anordnung des Exzenterantriebs 101 nach Figur 15 und 16, wobei das Stirnzahnrad 105 in entgegengesetzter Drehrichtung angetrieben wird. Beim Wechsel der Drehrichtung verdreht sich die drehbar in der Antriebswelle angeordnete Kurbelwelle 122 um 180°. Der Kurbelzapfen 110 ist in Bezug auf die Lagerung der Kurbelwelle 122 radial nach innen weisend angeordnet, so daß seine Exzentrizität e2 nunmehr entgegen der Exzentrizität e1 der Kurbelwelle 122 ausgerichtet ist. Damit stellt sich zwischen dem Kurbelzapfen 110 und Antriebselement 102 das kleinste Exzentergesamtmaß e4 ein. Der Kurbelzapfen 110 überträgt auf das Pleuel 111 einen Hub, der dem Doppelten des kleinsten Exzentergesamtmaßes e4 entspricht.

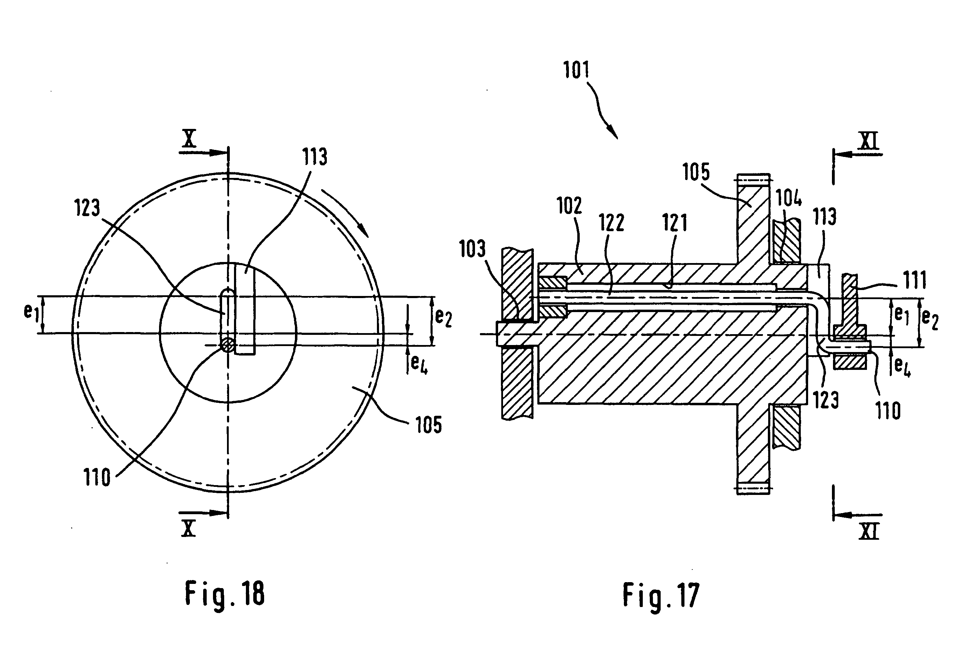

Es soll an dieser Stelle, insbesondere unter Bezugnahme auf Fig. 10, 11, 17, 18 darauf hingewiesen werden, daß die Teilexzentrizitäten in Betrag und Richtung nicht maßstablich dargestellt sind. Vielmehr ist bevorzugt vorgesehen, daß die Exzentrizität e2 größer als die Exzentrizität e1 gewählt werden kann. Dies hat zur Folge, daß bei Einstellung des kleinen Exzentermaßes e4 der antriebsseitige Mitnehmer 113 in jeder Drehstellung an dem Anschlag 115 anliegt.

Ein derartiger Kurbelbetrieb ist nicht nur für Mundduschen einsetzbar, sondern kann auch auf anderen Gebieten eingesetzt werden, z.B. bei Pumpvorrichtungen allgemein oder bei Vorrichtungen bei denen eine Umwandlung einer Rotationsbewegung in eine Translationsbewegung erreicht werden soll.

### Beschreibung der Tauchkolbenpumpe der Munddusche

Die Munddusche besitzt eine Tauchkolbenpumpe. Diese weist einen verbesserten Wirkungsgrad gegenüber bekannten Mundduschenpumpen auf. Insbesondere soll die Tauchkolbenpumpe einen möglichst verschleißarmen Antrieb für den Kolben aufweisen. Weiterhin soll die Lebensdauer des Kolbens und der Dichtung erhöht werden.

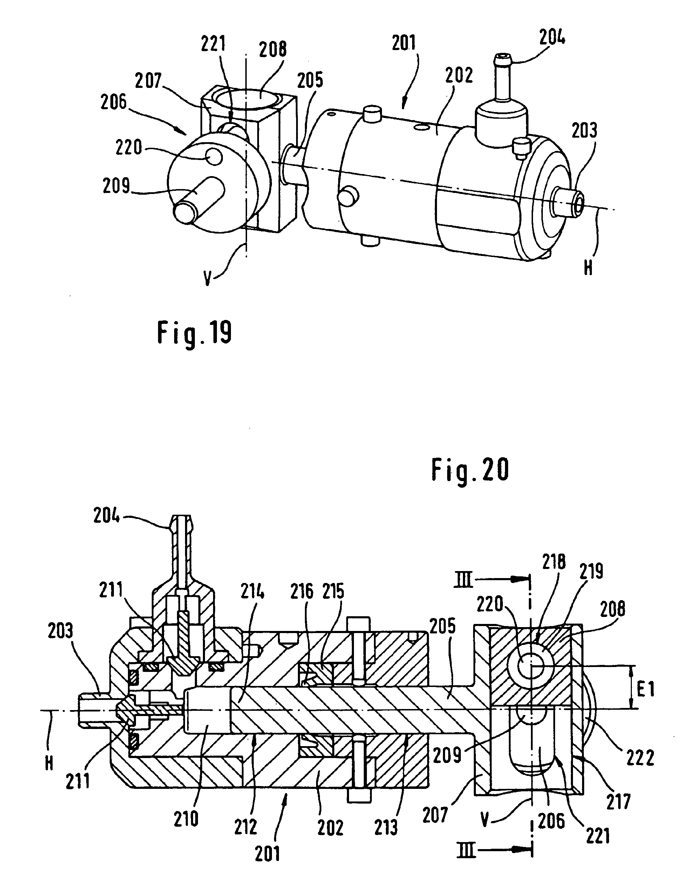

Die Tauchkolbenpumpe 201 in Figur 19 besitzt ein Pumpengehäuse 202, das einen axial angeordneten Pumpeneinlaß 203 und einen radial angeordneten Pumpenauslaß 204 aufweist. Am gegenüberliegenden Ende der Tauchkolbenpumpe 201 durchdringt ein Kolben 205 das Pumpengehäuse 202. Der Kolben 205 wird von einem Exzenterantrieb 206 bzw. Kurbeltrieb angetrieben. Der Kolben 205 besitzt eine Kulissenführung 207, die einen Kulissenstein 208 aufnimmt. Zur Bewegung des Kolbens 205 wird eine Antriebswelle 209 des Exzenterantriebs 206 bzw. Kurbeltriebs von einem nicht dargestellten Elektromotor in Rotation versetzt.

Der innere Aufbau der Tauchkolbenpumpe 201 mit der Pumpenkammer 210 ist in Figur 20 dargestellt. Die Pumpenkammer 210 besitzt mit dem Pumpeneinlaß 203 und dem Pumpenauslaß 204 zwei Anschlüsse, denen je ein Rückschlagventil 211 zugeordnet ist. Das eine oder die mehreren Rückschlagventile 211 können federbelastet ausgebildet sein. Die Rückschlagventile 211 sind so ausgerichtet, daß bei einer Bewegung des Kolbens 205 aus der Pumpenkammer 210 das Rückschlagventil 11 im Pumpeneinlaß 203 öffnet, während das Rückschlagventil 211 im Pumpenauslaß 204 geschlossen ist. Bei dieser Bewegung des Kolbens 205 wird Flüssigkeit aus einem nicht dargestellten Behälter in der Munddusche über den Pumpeneinlaß 203 in die Pumpenkammer 210 angesaugt. Bewegt sich der Kolben 205 in die entgegengesetzte Richtung, dreht sich das Verhalten der Rückschlagventile 211 um, und die Flüssigkeit wird über den Pumpenauslaß 204 zu einem nicht dargestellten Handstück der Munddusche gefördert.

Gelagert ist der Kolben 205 in zwei Lagerstellen 212, 213, die sich im Pumpengehäuse 202 befinden. Zusätzlich zu seiner axialen Beweglichkeit, ist der Kolben 205 um seine Längsachse H drehbar angeordnet. Die Lagerstelle 212 an der Pumpenkammer 210 ist so gestaltet, daß das Kolbenende 214 bei einem Hub zwischen dem oberen und unteren Totpunkt geführt ist. Die Lagerstelle 213 befindet sich am anderen Ende des Pumpengehäuses 202. Mittig zwischen den beiden Lagerstellen 212, 213 ist eine Dichtung 215 fest im Pumpengehäuse 202 angeordnet. Eine Dichtlippe 216 dichtet hierbei den Kolben 205 ab. Am anderen Ende des Kolbens 205 ist die Kulissenführung 207 angeordnet. Die Kulissenführung 207 weist eine Bohrung 217 auf, in der der zylindrische Kulissenstein 208 angeordnet ist.

Die Kulisse bzw. der Kulissenstein 208 ist sowohl axial beweglich als auch um die Achse V drehbar. Durch die drehbare Anordnung des Kolbens 205 und der Kulisse bzw. des Kulissensteins 208 um die Achsen H und V ist der Kolben 205 mit einem Kurbelzapfen 220 des Exzenterantriebs 206 (bzw. dem Kurbelzapfen 110 des Exzenterantriebs 101) praktisch wie kardanisch verbunden, nur mit den Unterschied, daß der Kolben 205 sich um die Achse H dreht anstatt um eine Achse geschwenkt wird, die senkrecht zu beiden Achsen H und V steht. Der Kolben 205 und diese kardanische bzw. kardanähnliche Verbindung ermöglicht einen Ausgleich einer raumschiefen Anordnung des Kurbelzapfens 220 infolge von Toleranzen oder elastischen und/oder plastischen oder sonstigen Verformungen.

Eine kardanische Verbindung im Sinne dieser Beschreibung entsteht, wenn der Kolben 205 und der Kulissenstein drehbar bzw. schwenkbar um jeweils unterschiedliche Achsen H, V sind, wobei beide Achsen H und V senkrecht zueinander stehen.

Der Kulissenstein 208 besitzt eine quer zur Achse V liegende Bohrung 218, in die eine Lagerbuchse 219 eingesetzt ist. Die Lagerbuchse 219 ist zur Aufnahme des Kurbelzapfens 220 ausgebildet. Zur Aufnahme im Kulissenstein 208 muß der Kurbelzapfen 220 die Kulissenführung 207 durchdringen. Hierzu besitzt die Kulissenführung 207 ein Langloch 221. Die Breite des Langlochs 221 ist größer als der Zapfendurchmesser. Auf diese Weise ist eine Berührung des Kurbelzapfens 220 mit der Kulissenführung 207 ausgeschlossen. Die Breite ist dabei so gewählt, daß auch bei einem raumschief angeordneten Kurbelzapfen 220 keine Berührung stattfindet.

Zum Antrieb des Kolbens 205 bewegt sich der Kurbelzapfen 220 auf einer Kreisbahn. In der gezeigten Darstellung befinden sich der Kurbelzapfen 220 und der Kulissenstein 208 im oberen Totpunkt. Der Kolben 205 befindet sich dagegen genau mittig zwischen seinen beiden Umkehrpunkten, die seinen Hub begrenzen. Bei einer Bewegung des Kurbelzapfens 220 im Uhrzeigersinn, bewegt sich der Kulissenstein 208 in der Kulissenführung 207 während der ersten halben Umdrehung nach unten. Der Kolben 205 erreicht nach einer Vierteldrehung des Kurbelzapfens 220 seinen hinteren Umkehrpunkt, der den Ansaugvorgang beendet. Bis zu diesem Zeitpunkt ist das Rückschlagventil 211 im Pumpeneinlaß 203 geöffnet, während das andere Rückschlagventil 211 geschlossen ist. Während der zweiten Vierteldrehung des Kurbelzapfens 220 bewegt sich der Kolben 205 wieder in Richtung Pumpenkammer 210.

Das Rückschlagventil 211 im Pumpeneinlaß 203 ist geschlossen, während das Rückschlagventil 211 im Pumpenauslaß 204 geöffnet ist. Nach einer halben Umdrehung erreicht der im Kulissenstein 208 gelagerte Kurbelzapfen 220 den unteren Totpunkt. Der Kolben 205 befindet sich in der dargestellten Position. Während der zweiten halben Umdrehung des Kurbelzapfens 220 wird der Kulissenstein 208 wieder nach oben bewegt, wobei der Kolben 205 nach der Hälfte dieser Bewegung seinen vorderen Umkehrpunkt erreicht, der den Auslaßvorgang beendet. Es bleibt zu erwähnen, daß in Fig. 20 Federn zur Vorspannung der Rückschlagventile 211 nicht dargestellt sind.

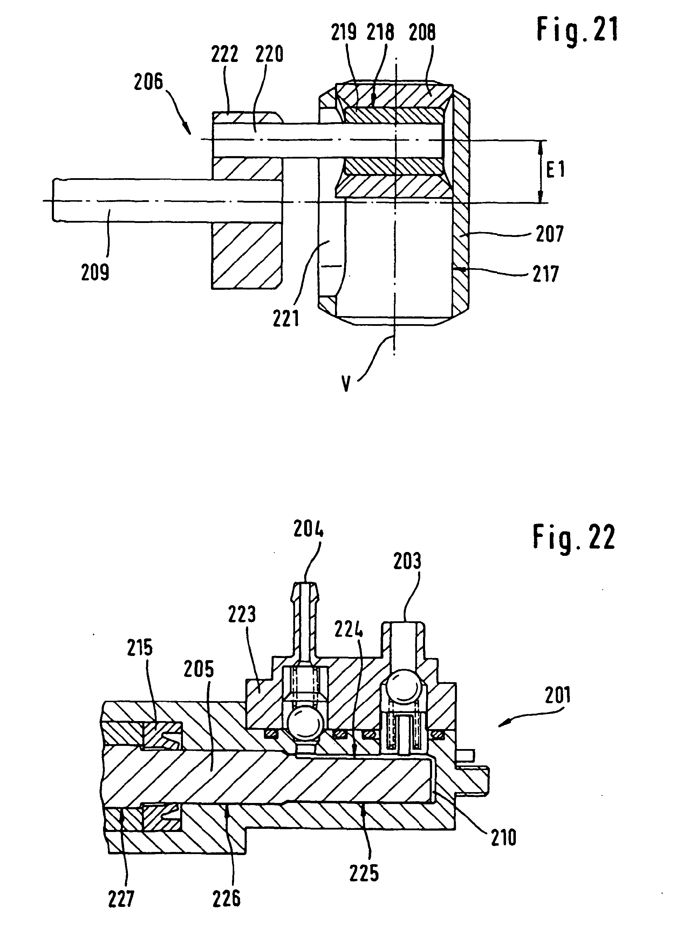

Figur 21 zeigt den Kurbeltrieb 206 mit der Kulissenführung 207 des Kolbens 205. Der Kurbeltrieb 206 besitzt eine Antriebswelle 209, auf der eine Scheibe 222 befestigt ist. Die Scheibe 222 trägt den mit der Exzentrizität E1 angeordneten Kurbelzapfen 220. Der Kurbelzapfen 220 reicht durch das Langloch 221 der Kulissenführung 207 bis in den Kulissenstein 208, wo er in einer Lagerbuchse 219 aufgenommen ist.

Die Tauchkolbenpumpe 201 einer zweiten Ausführungsform in Figur 22 zeigt die Anordnung des Pumpenauslasses 204 hinter dem Pumpeneinlaß 203, wobei beide Anschlüsse radial am Umfang der Tauchkolbenpumpe 201 angeordnet sind. Die Anschlüsse 203, 204 sind in einem Druckstück 223 integriert, das an der Tauchkolbenpumpe 201 montiert ist. Der Kolben 205 besitzt an seiner dem Pumpeneinlaß 203 und dem Pumpenauslaß 204 zugewandten Seite eine Abflachung 224. Die Abflachung 224 gewährleistet eine Verbindung des Pumpenauslasses 204 mit der Pumpenkammer 210, die unabhängig von der Lage des Kolbens 205 ist. In diesem Ausführungsbeispiel sind beide Rückschlagventile 211 jeweils mit einer Feder belastet bzw. vorgespannt.

Der Kolben 205 besitzt drei Bereiche mit unterschiedlichen Durchmessern 225-227, die von der Lagerstelle 212 über den Bereich der Dichtung 215 bis hin zu der nicht mehr gezeigten Lagerstelle 213 größer werden. Mit diesen Stufen 225-227 des Kolbendurchmessers wird eine Verteilung entstehender Verschleißpartikel in die Bereiche der Dichtung oder der Lagerstellen vermieden.

Eine derartige Pumpe ist nicht nur jede Mundduschen einsetzbar, sondern kann auch auf anderen Gebieten eingesetzt werden, z.B. bei Bewässerungsanlagen. Im Prinzip ist sie bei allen Pumpvorrichtungen mit Kolbenführung einsetzbar.

### Weitere Aspekte des Reinigungsverfahrens und der Munddusche

Die Munddusche weist vorzugsweise zwei Funktionen (Betriebsmodi) bzw. zwei unterschiedliche, wahlweise einsetzbare Sprühdüsen auf. Eine Funktion dient als herkömmliche Munddusche mit geringem Druck von vorzugsweise etwa 4 bis 8 bar, insbesondere etwa 6 bar (Hochdruckfunktion = etwa 45 bar). Hierbei werden keine mikrofeine Tropfen (Sprühfunktion) gebildet. Die Geschwindigkeit der austretenden Reinigungsflüssigkeit ist gering (Diese Geschwindigkeit beträgt vorzugsweise unter 20 m/s, insbesondere von 10 m/s bis 15 m/s). Der Durchfluß bei dieser Mundduschenfunktion beträgt mindestens 100 ml/min, insbesondere 200 ml/min bis 400 ml/min, vorzugsweise etwa 300 ml/min. Die andere Hochdruck-Funktion wurde bereits ausführlich beschrieben.

Die unterschiedlichen Funktionen ermöglichen der Umschaltexenter bzw. zwei unterschiedliche lange Hubwege der Pumpe.

Eine der beiden Funktionen kann wahlweise eingestellt werden. Eine Funktion ist praktisch eine Mundduschenfunktion, die andere eine neue spezielle Funktion zur Plaque-Entfernung, die mit dem Zähneputzen mittels einer Zahnbürste vergleichbar ist bzw. eine vergleichbare Reinigungswirkung aufweist. Diese spezielle Funktion kann zumindest den Einsatz einer Zahnbüste reduzieren und somit einen starken Abrieb vermeiden.

Die spezielle Funktion kann auch in einem eigenständigen Gerät ohne Mundduschenfunktion vorhanden sein. Denkbar ist auch eine Station mit zwei derart unterschiedlichen Mundduschen, d.h. eine Munddusche mit geringem Druck (als ein Gerät) und eine Hochdruck-Munddusche als ein weiteres Gerät, wobei beide Geräte die selbe oder unterschiedliche Pumpen benutzen können.

In der speziellen Funktion (Hochdruck-Sprühbetrieb) ist vorzugsweise eine Hochdruck-Kolbenpumpe vorgesehen, die vorzugsweise maximal etwa 50 bis 70 bar, insbesondere etwa 60 bar, erreicht. Möglich ist auch einer der oben beschriebenen Druckbereiche. Die Durchflußrate beträgt vorzugsweise etwa 50 bis 70 ml/min, insbesondere 60 ml/min. Der Arbeitsabstand zwischen Zahn und Düsenauslaß beträgt etwa 2 - 6 mm. Diese Werte haben sich bei klinischen Studien besonders bewährt.

Ein solches System mit zwei Funktionen ermöglicht eine besonders effektive Zahnpflege. Während durch die eigentliche Munddusche die Zähne vom groben Schnutzpartikeln befreit und das Zahnfleisch durchblutet wird sorgt das anschließende Reinigen mittels der Hochdruck-Sprühdüse für ein gründliches Reinigen der Zähne. Das System kann auch eine elektrische Zahnbüste umfassen.

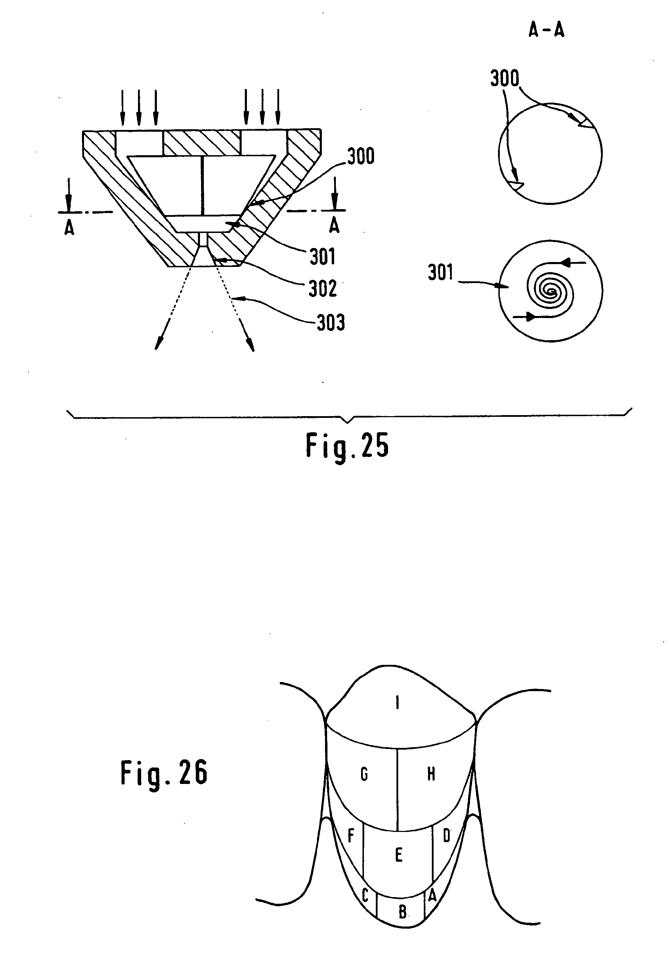

Die Figur 25 veranschaulicht nochmals die Sprühfunktion bzw. die spezielle Sprühdüse. Der Pfeil 300 veranschaulicht die exzentrisch angeordnete Schlitze, die den Wasserwirbel erzeugen. Der Pfeil 301 zeigt auf die Wirbelkammer mit rotierendem Wasser. Der Pfeil 302 zeigt auf das rotierende Wasser, welches einen dünnen Wasserfilm entlang des konischen Düsenaustritts bildet. Der Wasserfilm (Pfeil 303) geht am Austritt in mikropfeine Tropfen über.

Die Tropfengröße kann durch die Schlitzgeometrie und/oder den Schlitzabstand zur Mitte der Wirbelkammer und/oder durch den Winkel und/oder Länge des Austrittskonus verändert werden.

Fig. 26 zeigt eine Zahneinteilung nach "Rustogi". Durch die erfindungsgemäße Munddusche werden nach bereits 2 min/ Gebiss Reinigungszeit im aproximalen Bereichen (D und F) und in den ginginvanahen Bereichen (A, B und C) über 70 % bis 80 % der Plaque entfernt. In den übrigen Bereichen (I, G, H und E) ist sogar eine bessere Reinigungswirkung gegeben. Eine Reinigung ist auch in den Proximalbereichen (Zahnlücken) gegeben. Hierbei ist eine sehr abrasionsarme bzw. zahnschonende Reinigung gegeben.

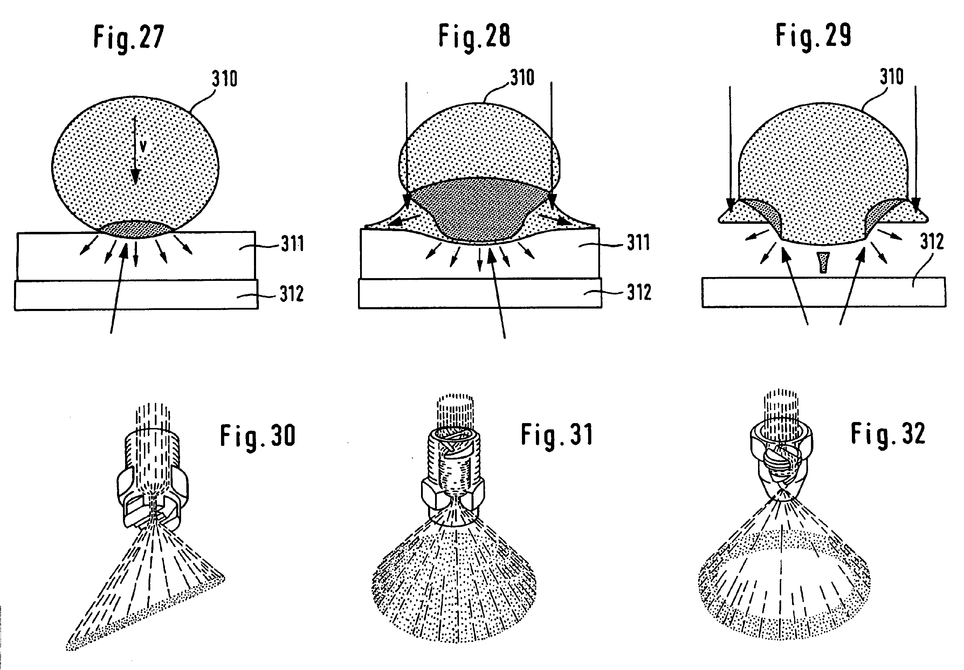

Die Figuren 27 bis 29 zeigen den Reinigungsvorgang anhand eines mikrofeinen Tropfens 310. Dieser trifft impulsartig mit hoher Energie auf eine Plaqueschicht 311 über einen Zahn 312 (Fig. 27). Durch diese Energie wird die Plaque nach außen gedrückt (Fig. 28), wobei in der Tropfenmitte ein hoher Druck vorhanden ist. Es entsteht ein Krater. Der Druck verlagert sich nach außen, wie die beiden nach oben gerichteten Pfeile der Fig. 29 veranschaulichen.

Die Figuren 30 bis 32 zeigen weitere Ausführungsformen der Sprühdüse, die mit den Merkmalen einer oder mehrerer der oben beschriebenen Düsen kombinierbar sind.

Die Sprühdüse gemäß Fig. 30 erzeugt einen flachen Strahl, der sich erweitert. Fig. 31 zeigt eine Sprühdüse mit einem Vollkegelstahl. Fig. 32 zeigt eine Sprühdüse mit einem Hohlkegelstrahl, mit dem eine sehr sanfte Reinigungswirkung erreicht werden kann, wobei das Wasservolumen gering ist.

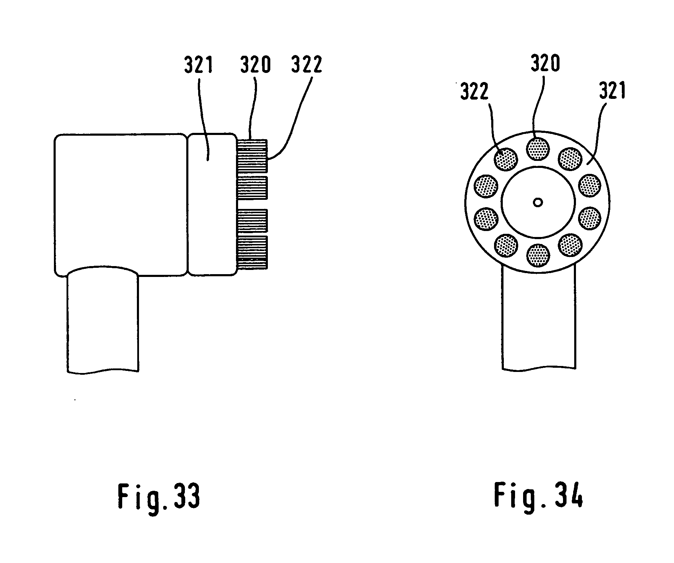

Im der Figuren 33 und 34 ist eine Sprühdüse mit einen Düsenaufsatz, der vorzugsweise als Bürstenkranz 320 - vorzugsweise mit einem Kunststoffring 321 und sektorweise angeordnete Bürstenhaare 322 - ausgebildet ist. Dieser kann fest oder lösbar am Düsenkopf angeordnet sein. Der Bürstenkranz hat neben einer Steigerung der Reinigungswirkung noch den Zusatzeffekt eines Abstandselements, so daß zwischen Zahn und Düsenöffnung ein festgelegter (Sicherheits-) Abstand besteht. Denkbar ist auch eine Funktion, bei der sich der Bürstenkranz dreht, insbesondere abwechselnd in zwei Drehrichtungen, ähnlich einer elektrischen Zahnbüste, d.h. durch einen elektrischen Antrieb, insbesondere einen Motorantrieb bewegt wird. Andere Bewegungsabläufe und Bürstenformen sich aber auch möglich. Als Abstandselement kann auch ein büstenloses Element dienen. Der bürstenartige Düsenaufsatz kann auch für eine bekannte Niederdruck-Munddusche eingesetzt werden.

Die Erfindung ist nicht nur auf die beschriebenen Beispiele beschränkt. Eine beliebige Kombination der Einzelmerkmale verschiedener Beispiele ist möglich. Insbesondere ist die Kombination einer Munddusche nach den Figuren 1 bis 7 mit einem Exzenterantrieb nach den Figuren 8 bis 18 und/oder mit einer Pumpe gemäß den Figuren 19 bis 24 zweckmäßig.

## Patentansprüche

1. Munddusche mit einer Sprühdüse (1) und einem Düsenauslaß (18, 19), bei der eine Reinigungsflüssigkeit der Sprühdüse zugeführt und zu dem Düsenauslaß gefördert wird und aus diesem austritt, wobei die Sprühdüse (1) derart ausgebildet ist, daß ein Flüssigkeitsstrahl erzeugt wird, **gekennzeichnet durch** eine Ausbildung derart, daß die Reinigungsflüssigkeit der Sprühdüse mit einem Druck von mindestens etwa 15 bar zugeführt wird, sodaß von dem Düsenauslaß aus der austretenden Reinigungsflüssigkeit ein Flüssigkeitsstrahl aus mikrofeinen Tropfen und hoher Geschwindigkeit erzeugt wird.

2. Munddusche nach Anspruch 1, **dadurch gekennzeichnet, daß** die Geschwindigkeit des Flüssigkeitsstrahls mindestens 23 m/s beträgt.

3. Munddusche nach Anspruch 1 oder 2, **dadurch gekennzeichnet, daß** die Sprühdüse derart ausgebildet ist, daß der Flüssigkeitsstrahl ein divergierender Hohlkegelstrahl ist.

4. Munddusche nach einem der Ansprüche 1 bis 3, **gekennzeichnet durch** eine Ausbildung derart, daß die Reinigungsflüssigkeit der Sprühdüse mit einem Druck von mindestens 15 bar, vorzugsweise mit etwa 25 bar bis 55 bar, insbesondere 35 bar bis 45 bar zugeführt wird.

5. Munddusche nach einem der vorhergehenden Ansprüche, **dadurch gekennzeichnet, daß** die Sprühdüse derart ausgebildet ist, daß der Flüssigkeitsstrahl im Düsenauslaß ein dünner Film ist, der bei oder nach dem Verlassen des Düsenauslasses in mikrofeine Tropfen übergeht.

6. Munddusche nach einem der vorhergehenden Ansprüche, **dadurch gekennzeichnet, daß** der Düsenauslaß, die Sprühdüse und/oder die Munddusche, derart ausgebildet sind, daß die Tropfen einen Durchmesser von etwa 5-10µm und eine Geschwindigkeit von mindestens 23 m/s, vorzugsweise etwa 40 m/sec bis 55 m/sec aufweisen.

7. Munddusche nach einem der vorhergehenden Ansprüche, **gekennzeichnet durch** eine elektromotorisch antreibbare Pumpe und einen Flüssigkeitsbehälter, wobei die Pumpe über einen Schlauch mit einem Handstück und einer Sprühdüse verbunden und an dem Handstück (31) die Sprühdüse (1) angeordnet ist.

8. Munddusche nach Anspruch 7, **dadurch gekennzeichnet, daß** die Sprühdüse (1) am Handstück (31) gegen eine andere Sprüh- und/oder Strahldüse auswechselbar ist.

9. Munddusche nach einem der Ansprüche 7 oder 8, **dadurch gekennzeichnet, daß** die Pumpe (28) in Abhängigkeit von der am Handstück (31) angeordneten Sprüh- und/oder Strahldüse (1) zwischen mehreren, insbesondere zwischen zwei Betriebsmodi umschaltbar ist.

10. Munddusche nach Anspruch 9, **dadurch gekennzeichnet, daß** ein Drehzahl- oder Drehmomentsensor (32) an der Pumpe (28) oder an dem Elektromotor (29) zum Erfassen der Drehzahl oder des Drehmoments eines Rotors der Pumpe (28) oder des Elektromotors (29) angeordnet ist, daß von dem Drehzahl- oder Drehmomentsensor (32) ein der erfaßten Drehzahl oder des erfaßten Drehmoments entsprechendes Signal einer Steuereinheit zuleitbar und von der Steuereinheit der Elektromotor (29) mit dem der erfaßten Drehzahl oder des erfaßten Drehmoments zugeordneten Betriebsmodus ansteuerbar ist.

11. Munddusche nach Anspruch 10, **dadurch gekennzeichnet, daß** ein Drucksensor (32) zwischen Pumpe (28) und Sprühdüse (1) zum Erfassen des Drucks der zur Sprühdüse (1) geförderten Reinigungsflüssigkeit angeordnet ist, daß von dem Drucksensor (32) ein dem erfaßten Druck entsprechendes Signal einer Steuereinheit zuleitbar und von der Steuereinheit der Elektromotor (29) mit dem dem erfaßten Druck zugeordneten Betriebsmodus ansteuerbar ist.

12. Munddusche nach einem der vorhergehenden Ansprüche , **gekennzeichnet durch** ein Kurbeltrieb einer Pumpe der Munddusche, mit einem von einer Antriebseinrichtung um eine Drehachse drehbar antreibbaren Antriebselement und einer um ein Exzentergesamtmaß parallel zur Drehachse an dem Antriebselement angeordneten, als Abtrieb dienenden Exzenterwelle bzw. Kurbelzapfen, wobei die Exzenterwelle bzw. der Kurbelzapfen (110) in ihrem Exzentergesamtmaß (e3, e4) verstellbar an dem Antriebselement (102) angeordnet ist.

13. Munddusche nach Anspruch 12, **dadurch gekennzeichnet, daß** das Antriebselement (102) reversierbar drehbar antreibbar und die Exzenterwelle an einem Abtriebselement angeordnet ist, das um eine zur Drehachse um eine erste Exzentrizität (e1) parallele Schwenkachse zwischen einer ersten und einer zweiten Endstellung frei schwenkbar an dem Antriebselement (102) angeordnet ist.

14. Munddusche nach Anspruch 13, **dadurch gekennzeichnet, daß** das Abtriebselement eine Scheibe (106) aufweist, die an dem Antriebselement (102) um die Schwenkachse schwenkbar gelagert ist, daß die Scheibe (106) einen Kurbelzapfen (110) trägt, der sich mit einer zweiten Exzentrizität (e2) parallel zur Drehachse erstreckt, daß das Antriebselement (102) einen axial hervorstehenden Mitnehmer (113) besitzt, der mit dem Antriebselement (102) schwenkbar ist und zwischen zwei die beiden Endstellungen definierenden Anschläge (114, 115) ragt, wobei die Anschläge (114, 115) an der Scheibe (106) angeordnet sind.

15. Munddusche nach Anspruch 14, **dadurch gekennzeichnet, daß** die zweite Exzentrizität (e2) des Kurbelzapfens (110) größer als die erste Exzentrizität (e1) der Scheibe (106) ist und/oder daß die erste Exzentrizität (e1) der Kurbelwelle (122) kleiner als die zweite Exzentrizität (e2) des Kurbelzapfens (110) ist.

16. Munddusche nach Anspruch 14 oder 15, **dadurch gekennzeichnet, daß** die Anschläge (114, 115) jeweils die Enden einer in der Scheibe (106) kreisbogenförmigen, konzentrisch angeordneten Nut (112) sind, in der der Mitnehmer (113) bewegbar ist, wobei sich die Nut (112) vorzugsweise über einen Winkelbereich von bis zu 180° erstreckt.

17. Munddusche nach einem der Ansprüche 12 bis 16, **dadurch gekennzeichnet, daß** das Antriebselement (102), insbesondere die Antriebswelle mit einem Antriebsrad, vorzugsweise einem Stirnzahnrad (105), verbunden ist.

18. Munddusche nach einem der vorhergehenden Ansprüche, **gekennzeichnet durch** eine T auchkolbenpumpe, mit einem Pumpengehäuse, in dem eine Pumpenkammer angeordnet ist, in die ein Pumpeneinlaß und ein Pumpenauslaß münden, mit einem in der Pumpenkammer axial beweglich geführten Kolben (205), der **durch** eine Dichtung gegenüber der Wandung der Pumpenkammer abgedichtet ist, mit einem Exzenterantrieb bzw. Kurbeltrieb zum axial beweglichen Antrieb des Kolbens, wobei der Exzenterantrieb bzw. Kurbeltrieb über einen sich quer zur Bewegungsrichtung des Kolbens erstreckenden Kurbelzapfen mit dem Kolben verbunden ist, und wobei der Kolben (205) an zwei Lagerstellen (212, 213) des Pumpengehäuses (202) axial verschiebbar geführt ist, die in einem Abstand voneinander angeordnet sind.

19. Munddusche nach Anspruch 18, **dadurch gekennzeichnet, daß** zumindest eine der Lagerstellen (212, 213) in einem Endbereich des Verschiebewegs des Kolbens (205) in dem Pumpengehäuse (202) angeordnet ist.

20. Munddusche nach einem der Ansprüche 18 oder 19, **dadurch gekennzeichnet, daß** der Kurbelzapfen (220) in einer Kulisse (208) bzw. einem Kulissenstein drehbar gelagert und die Kulisse (208) bzw. der Kulissenstein in einer mit dem Kolben (205) verbundenen Kulissenführung (207) quer zur Bewegungsrichtung des Kolbens (205) beweglich angeordnet ist, wobei die Kulisse (208) bzw. der Kulissenstein vorzugsweise einen zylinderförmigen Querschnitt besitzt und die Kulissenführung (207) als Bohrung (217) mit entsprechendem Querschnitt in einem bevorzugt kolbenfesten Teil ausgebildet ist.

21. Munddusche nach Anspruch 20, **dadurch gekennzeichnet, daß** in der Wand der Kulissenführung (207) ein Langloch (221) zum Durchtritt des Kurbelzapfens (220) ausgebildet ist, das eine größere Breite als der Durchmesser des Kurbelzapfens (220) besitzt, wobei vorzugsweise der Kurbelzapfen (220) in der Kulisse (208) in einem Lager (219) drehbar gelagert ist, welches in eine Bohrung (118) der Kulisse (208) eingesetzt ist und/oder der Kolben (205) um seine Längsachse (H) drehbar angeordnet ist und/oder die Kulisse (208) um ihre Längsachse (V) drehbar angeordnet ist..

22. Sprühdüsen zur Erzeugung eines Flüssigkeitsstrahls für eine Munddusche nach einem der vorhergehenden Ansprüche, mit einem Düsenkörper, der eine Kammer aufweist, in die ein Flüssigkeitskanal zur Zufuhr von unter Druck stehender Reinigungsflüssigkeit mündet und von der ein Düsenauslaß zum Austreten eines Reinigungsflüssigkeitsstrahls ausgeht, wobei die Kammer mit einer Wirbelkammer etwa runden Querschnitts zum Erzeugen eines umlaufenden Stroms der Reinigungsflüssigkeit verbunden ist, von der zentrisch der Düsenauslaß ausgeht, der aus einer Engstelle und einer Erweiterung besteht, wobei der Düsenauslaß vorzugsweise in einem an dem Düsenkörper angeordneten Düsenaufsatz ausgebildet ist, **gekennzeichnet durch** eine Ausbildung derart, daß die Reinigungsflüssigkeit der Sprühdüse mit einem Druck von mindestens etwa 15 bar zugeführt wird, sodaß von dem Düsenauslaß aus der austretenden Reinigungsflüssigkeit ein Flüssigkeitsstrahl aus mikrofeinen Tropfen und hoher Geschwindigkeit erzeugt wird.

23. Sprühdüse nach Anspruch 22, **dadurch gekennzeichnet, daß** die Erweiterung ein Hohlkegel bzw. eine Kegelfläche (19) ist.

24. Sprühdüse nach Anspruch 22 oder 23, **dadurch gekennzeichnet, daß** Öffnungen (14) etwa quer sowie mit einem Mittenversatz (x) zur Längsachse der Wirbelkammer (15) in die Wirbelkammer (15) einmünden, wobei der aus den Öffnungen (14) austretende Flüssigkeitsstrahl auf die gegenüberliegende Wandung der Wirbelkammer (15) in einem Winkel von höchstens 45° auftrifft.

25. Sprühdüse nach einem der Ansprüche 22 bis 24, **dadurch gekennzeichnet, daß** an einer zylindrischen Außenseite eines - vorzugsweise ersten - topfförmigen Teils (8) axial verlaufende Nuten (12) von der Kammer (6) zu Öffnungen (14) führen.

26. Sprühdüse nach Anspruch 25, **dadurch gekennzeichnet, daß** das Druckstück (7) an seinem anderen Ende ein zweites topfförmiges Teil (10) aufweist, dessen Innenraum mit dem Flüssigkeitskanal (5) sowie mit der Kammer (6) in Verbindung steht, wobei insbesondere ein Innenraum des zweiten topfförmigen Teils (10) über mindestens eine Öffnung, vorzugsweise 3 bis 4 Öffnungen, mit der Kammer (6) in Verbindung steht, wobei jede Öffnung als axialer Schlitz (11) ausgebildet ist.

27. Sprühdüse nach einem der Ansprüche 22 bis 26, **dadurch gekennzeichnet, daß** ein Druckstück (7) in der Kammer (6) axial federnd eingespannt ist und insbesondere aus einem elastischen Material besteht, wobei die durch die Schlitze (11) gebildeten Bereiche des zweiten topfförmigen Teils (10) vorzugsweise Federarme (21) bilden.

28. Zahnreinigungssystem bestehend aus einer Mundusche und/oder eine Sprühdüse nach einem der vorhergehenden Ansprüche, **gekennzeichnet durch** zwei Betriebsfunktionen, und zwar eine Hochdruckfunktion zur Plaqueentfernung und einer Mundduschenfunktion mit geringerem Druck.

29. Zahnreinigungssystem, Munddusche oder Sprühdüse nach einem der vorhergehenden Ansprüche, **gekennzeichnet durch** einen Bürstenaufsatz, vorzugsweise einen Büstenkranz, der mit der Sprühdüse verbunden oder verbindbar ausgeführt ist.

## Claims

1. An oral irrigator having a spray nozzle (1) and a nozzle outlet (18, 19), in which a cleaning liquid is supplied to the spray nozzle and is conveyed to the nozzle outlet and is emitted therefrom, the spray nozzle (1) being fashioned such that a liquid jet is produced, **characterized by** a configuration such that the cleaning liquid is supplied to the spray nozzle with a pressure of at least approximately 15 bar, so that the nozzle outlet produces, from the cleaning fluid being emitted, a high-speed liquid jet made up of microfine drops.

2. The oral irrigator as recited in Claim 1, **characterized in that** the speed of the liquid jet is at least 23 m/s.

3. The oral irrigator as recited in Claim 1 or 2, **characterized in that** the spray nozzle is fashioned such that the liquid jet is a divergent hollow cone jet.

4. The oral irrigator as recited in one of Claims 1 through 3, **characterized by** a configuration such that the cleaning liquid is supplied to the spray nozzle under a pressure of at least 15 bar, preferably approximately 25 bar to 55 bar, in particular 35 bar to 45 bar.

5. The oral irrigator as recited in one of the preceding claims, **characterized in that** the spray nozzle is fashioned such that the liquid jet in the nozzle outlet is a thin film that changes into microfine drops during or after emission from the nozzle outlet.

6. The oral irrigator as recited in one of the preceding claims, **characterized in that** the nozzle outlet, the spray nozzle, and/or the oral irrigator are fashioned such that the drops have a diameter of approximately 5-10 µm and a speed of at least 23 m/s, preferably approximately 40 m/sec to 55 m/sec.

7. The oral irrigator as recited in one of the preceding claims, **characterized by** a pump that can be driven by an electric motor and a liquid container, the pump being connected via a hose to a handle and to a spray nozzle, and the spray nozzle (1) being situated on the handle (31).

8. The oral irrigator as recited in Claim 7, **characterized in that** the spray nozzle (1) on the handle (31) can be exchanged for a different spray nozzle and/or jet nozzle.

9. The oral irrigator as recited in one of Claims 7 or 8, **characterized in that** as a function of the spray nozzle and/or jet nozzle (1) situated on the handle (31), the pump can be switched between a plurality of operating modes, in particular between two operating modes.

10. The oral irrigator as recited in Claim 9, **characterized in that** a rotational speed sensor or torque sensor (32) is situated on the pump (28) or on the electric motor (29) in order to acquire the rotational speed or the torque of a rotor of the pump (28) or of the electric motor (29), and that a signal corresponding to the acquired rotational speed or the acquired torque can be supplied by the rotational speed sensor or torque sensor (32) to a control unit, and the control unit can drive the electric motor (29) with the operating mode associated with the acquired rotational speed or the acquired torque.

11. The oral irrigator as recited in Claim 10, **characterized in that** a pressure sensor (32) is situated between the pump (28) and the spray nozzle (1) in order to acquire the pressure of the cleaning liquid conveyed to the spray nozzle (1), and that a signal corresponding to the acquired pressure can be supplied by the pressure sensor (32) to a control unit, and the control unit can drive the electric motor (29) with the operating mode associated with the acquired pressure.

12. The oral irrigator as recited in one of the preceding claims, **characterized by** a crank drive of a pump of the oral irrigator, having a drive element that can be driven rotationally about an axis of rotation by a drive device, and having an eccentric shaft or crank pin that is situated on the drive element parallel to the axis of rotation about an eccentric overall dimension and that acts as the output side, the eccentric shaft or crank pin (110) being situated on the drive element (102) such that its eccentric overall dimension (e3, e4) can be displaced.

13. The oral irrigator as recited in Claim 12, **characterized in that** the drive element (102) can be rotationally driven in reversible fashion, and the eccentric shaft is situated on an output-side element that is situated on the drive element (102) so as to be freely pivotable between a first and a second end position about a pivot axis that is parallel to the axis of rotation by a first eccentricity (e1).

14. The oral irrigator as recited in Claim 13, **characterized in that** the output-side element has a disk (106) that is mounted on the drive element (102) so as to be pivotable about the pivot axis, and that the disk (106) bears a crank pin (110) that extends parallel to the axis of rotation with a second eccentricity (e2), and that the drive element (102) has an axially protruding entraining element (113) that can pivot with the drive element (102) and that protrudes between two stops (114, 115) that define the two end positions, the stops (114, 115) being situated on the disk (106).

15. The oral irrigator as recited in Claim 14, **characterized in that** the second eccentricity (e2) of the crank pin (110) is greater than the first eccentricity (e1) of the disk (106), and/or that the first eccentricity (e1) of the crankshaft (122) is smaller than the second eccentricity (e2) of the crank pin (110).

16. The oral irrigator as recited in Claim 14 or 15, **characterized in that** the stops (114, 115) are the respective ends of a groove (112) that has the shape of a circular arc and is concentrically situated in the disk (106), the entraining element (113) being movable in said groove, and said groove (112) preferably extending over an angular range of up to 180°.

17. The oral irrigator as recited in one of Claims 12 through 16, **characterized in that** the drive element (102), in particular the drive shaft, is connected to a drive wheel, preferably a front gear (105).

18. The oral irrigator as recited in one of the preceding claims, **characterized by** a plunger pump having a pump housing in which there is situated a pump chamber into which a pump inlet and a pump outlet open, having a plunger (205) that is guided in axially movable fashion in the pump chamber, said plunger being sealed relative to the wall of the pump chamber by a seal, having an eccentric drive or crank drive for the axially movable driving of the plunger, the eccentric drive or crank drive being connected to the plunger via a crank pin that extends transverse to the direction of movement of the plunger, and the plunger (205) being guided in axially displaceable fashion at two bearing points (212, 213) of the pump housing, said bearing points being situated at a distance from one another.

19. The oral irrigator as recited in Claim 18, **characterized in that** at least one of the bearing points (212, 213) is situated in an end area of the displacement path of the plunger (205) in the pump housing (202).

20. The oral irrigator as recited in one of Claims 18 or 19, **characterized in that** the crank pin (220) is rotatably mounted in a slide (208) or a slide block, and the slide (208) or slide block is situated in a slide guide (207) connected to the plunger (205) so as to be movable transverse to the direction of movement of the plunger (205), the slide (208) or slide block preferably having a cylindrical cross-section and the slide guide (207) being fashioned as a bore (217) having a corresponding cross-section in a part that is preferably affixed in stationary fashion to the plunger.

21. The oral irrigator as recited in Claim 20, **characterized in that** an oblong hole (221) through which the crank pin (220) passes is fashioned in the wall of the slide guide (207), said hole having a width larger than the diameter of the crank pin (220), the crank pin (220) preferably being rotatably mounted in the slide (208) in a bearing (219) that is set into a bore (118) of the slide (208), and/or the plunger (205) being situated so as to be rotatable about its longitudinal axis (H) and/or the slide (208) being situated so as to be rotatable about its longitudinal axis (V).

22. A spray nozzle for producing a liquid jet for an oral irrigator as recited in one of the preceding claims, having a nozzle body that has a chamber into which there opens a liquid duct for supplying cleaning liquid under pressure, and from which a nozzle outlet goes out for the emission of a jet of cleaning liquid, the chamber being connected to a turbulence chamber having an approximately round cross-section in order to produce a circulating current of the cleaning liquid, the nozzle outlet going out centrically from said turbulence chamber, said nozzle outlet being made up of a narrow point and an expansion, the nozzle outlet preferably being fashioned in a nozzle attachment situated on the nozzle body, **characterized by** a configuration such that the cleaning liquid is supplied to the spray nozzle with a pressure of at least approximately 15 bar, so that the nozzle outlet produces a high-speed liquid jet made up of microfine drops from the cleaning liquid being emitted.

23. The spray nozzle as recited in Claim 22, **characterized in that** the expansion is a hollow cone or a cone surface (19).

24. The spray nozzle as recited in Claim 22 or 23, **characterized in that** openings (14) open into the turbulence chamber (15) approximately transversely and with a center offset (x) to the longitudinal axis of the turbulence chamber (15), the liquid jet emitted from the openings (14) striking the opposite wall of the turbulence chamber (15) at an angle of at most 45°.

25. The spray nozzle as recited in one of Claims 22 through 24, **characterized in that** on a cylindrical external side of a -- preferably first -- pot-shaped part (8), grooves (12) that run axially lead from the chamber (6) to openings (14).

26. The spray nozzle as recited in Claim 25, **characterized in that** the pressure piece (7) has on its other end a second pot-shaped part (10) whose interior is connected to the liquid duct (5) and to the chamber (6), an interior of the second pot-shaped part (10) being in particular connected to the chamber (6) via at least one opening, preferably 3 to 4 openings, each opening being fashioned as an axial slot (11).

27. The spray nozzle as recited in one of Claims 22 through 26, **characterized in that** a pressure piece (7) is clamped in the chamber (6) in an axially resilient manner, and in particular is made of an elastic material, the areas of the second pot-shaped part (10) formed by the slots (11) preferably forming spring arms (21).

28. A tooth-cleaning system made up of an oral irrigator and/or a spray nozzle as recited in one of the preceding claims, **characterized by** two operating functions, namely a high-pressure function for removing plaque and an oral irrigation function having lower pressure.

29. A tooth-cleaning system, oral irrigator, or spray nozzle as recited in one of the preceding claims, **characterized by** a brush attachment, preferably a brush ring, that is connected to the spray nozzle or is made so as to be connectable thereto.

## Revendications

1. Irrigateur buccal comportant une buse de pulvérisation (1) et une sortie de buse (18, 19), dans lequel un liquide de nettoyage est fourni à la buse de pulvérisation et est transporté vers la sortie de buse et en est émis, la buse de pulvérisation (1) étant façonnée de telle sorte qu'un jet de liquide est produit, **caractérisé par** une configuration telle que le liquide de nettoyage est fourni à la buse de pulvérisation avec une pression d'au moins approximativement 15 bar, de sorte que la sortie de buse produit, à partir du fluide de nettoyage émis, un jet de liquide à vitesse élevée constitué de gouttes microfines.

2. Irrigateur buccal selon la revendication 1, **caractérisé en ce que** la vitesse du jet de liquide est d'au moins 23 m/s.

3. Irrigateur buccal selon la revendication 1 ou 2, **caractérisé en ce que** la buse de pulvérisation est façonnée de telle sorte que le jet de liquide est un jet à cône creux divergent.

4. Irrigateur buccal selon l'une des revendications 1 à 3, **caractérisé par** une configuration telle que le liquide de nettoyage est fourni à la buse de pulvérisation sous une pression d'au moins 15 bar, de préférence approximativement 25 bar à 55 bar, en particulier 35 bar à 45 bar.

5. Irrigateur buccal selon l'une des revendications précédentes, **caractérisé en ce que** la buse de pulvérisation est façonnée de telle sorte que le jet de liquide dans la sortie de buse est un film mince qui se change en gouttes microfines durant ou après émission à partir de la sortie de buse.

6. Irrigateur buccal selon l'une des revendications précédentes, **caractérisé en ce que** la sortie de buse, la buse de pulvérisation, et/ou l'irrigateur buccal sont façonnés de telle sorte que les gouttes ont un diamètre d'approximativement 5 à 10 µm et une vitesse d'au moins 23 m/s, de préférence approximativement 40 m/s à 55 m/s.

7. Irrigateur buccal selon l'une des revendications précédentes, **caractérisé par** une pompe qui peut être entraînée par un moteur électrique et un récipient à liquide, la pompe étant connectée via un conduit flexible vers un manche et vers une buse de pulvérisation, et la buse de pulvérisation (1) étant située sur le manche (31).

8. Irrigateur buccal selon la revendication 7, **caractérisé en ce que** la buse de pulvérisation (1) sur le manche (31) peut être échangée pour une buse de pulvérisation et/ou une buse de jet différentes.

9. Irrigateur buccal selon l'une des revendications 7 ou 8, **caractérisée en ce qu'**en fonction de la buse de pulvérisation et/ou de la buse de jet (1) située sur le manche (31), la pompe peut être commutée entre une pluralité de modes de fonctionnement, en particulier entre deux modes de fonctionnement.

10. Irrigateur buccal selon la revendication 9, **caractérisé en ce qu'**un capteur de vitesse de rotation ou un capteur de couple (32) est situé sur la pompe (28) ou sur le moteur électrique (29) afin de recueillir la vitesse de rotation ou le couple d'un rotor de la pompe (28) ou du moteur électrique (29), et **en ce qu'**un signal correspondant à la vitesse de rotation recueillie ou au couple recueilli peut être fourni par le capteur de vitesse de rotation ou le capteur de couple (32) à une unité de contrôle, et l'unité de contrôle peut entraîner le moteur électrique (29) avec le mode de fonctionnement associé à la vitesse de rotation recueillie ou le couple recueilli.

11. Irrigateur buccal selon la revendication 10, **caractérisé en ce qu'**un capteur de pression (32) est situé entre la pompe (28) et la buse de pulvérisation (1) afin de recueillir la pression du liquide de nettoyage transporté à la buse de pulvérisation (1), et **en ce qu'**un signal correspondant à la pression recueillie peut être fourni par le capteur de pression (32) à une unité de contrôle, et l'unité de contrôle peut entraîner le moteur électrique (29) avec le mode de fonctionnement associé à la pression recueillie.

12. Irrigateur buccal selon l'une des revendications précédentes, **caractérisé par** un entraînement à manivelle d'une pompe de l'irrigateur buccal, ayant un élément d'entraînement qui peut être entraîné par rotation autour d'un axe de rotation par un dispositif d'entraînement, et ayant un arbre excentrique ou maneton excentrique qui est situé sur l'élément d'entraînement parallèle à l'axe de rotation autour d'une dimension excentrique globale et qui agit en tant que côté de sortie, l'arbre excentrique ou maneton excentrique (110) étant situé sur l'élément d'entraînement (102) de telle sorte que sa dimension excentrique globale (e3, e4) peut être déplacée.

13. Irrigateur buccal selon la revendication 12, **caractérisé en ce que** l'élément d'entraînement (102) peut être entraîné par rotation d'une façon réversible, et l'arbre excentrique est situé sur un élément du côté de sortie qui est situé sur l'élément d'entraînement (102) de façon à pouvoir pivoter librement entre une première et une deuxième position d'extrémité autour d'un axe de pivotement qui est parallèle à l'axe de rotation par une première excentricité (e1).

14. Irrigateur buccal selon la revendication 13, **caractérisé en ce que** l'élément du côté sortie comporte un disque (106) qui est monté sur l'élément d'entraînement (102) de façon à pouvoir pivoter autour de l'axe de pivotement, et **en ce que** le disque (106) porte un maneton excentrique (110) qui s'étend parallèle à l'axe de rotation avec une deuxième excentricité (e2), et **en ce que** l'élément d'entraînement (102) a un élément entraînant (113) ressortant en sens axial, lequel peut pivoter avec l'élément d'entraînement (102) et lequel ressort entre deux arrêts (114, 115) qui définissent les deux positions finales, les arrêts (114, 115) étant situés sur le disque (106).

15. Irrigateur buccal selon la revendication 14, **caractérisé en ce que** la deuxième excentricité (e2) du maneton excentrique (110) est plus grande que la première excentricité (e1) du disque (106), et/ou **en ce que** la première excentricité (e1) du vilebrequin (122) est plus petite que la deuxième excentricité (e2) du maneton excentrique (110).

16. Irrigateur buccal selon la revendication 14 ou 15, **caractérisé en ce que** les arrêts (114, 115) sont les extrémités respectives d'une rainure (112) qui a la forme d'un arc circulaire et est située concentriquement dans le disque (106), l'élément entraînant (113) étant mobile dans ladite rainure, et ladite rainure (112) s'étendant de préférence sur une plage angulaire allant jusqu'à 180°.

17. Irrigateur buccal selon l'une des revendications 12 à 16, **caractérisé en ce que** l'élément d'entraînement (102), en particulier l'arbre de transmission, est attaché à une roue d'entraînement, de préférence un engrenage avant (105).

18. Irrigateur buccal selon l'une des revendications précédentes, **caractérisé par** une pompe à piston ayant un logement de pompe dans lequel est située une chambre d'aspiration dans laquelle une entrée de pompe et une sortie de pompe s'ouvrent, ayant un piston (205) qui est guidé d'une façon mobile en sens axial dans la chambre d'aspiration, ledit piston étant scellé par rapport à la paroi de la chambre d'aspiration par un joint, ayant un entraînement excentrique ou entraînement à manivelle pour l'entraînement mobile en sens axial du piston, l'entraînement excentrique ou l'entraînement à manivelle étant attaché au piston via un maneton excentrique qui s'étend transversalement à la direction de mouvement du piston, et le mécanisme coulissant (205) étant guidé d'une façon déplaçable en sens axial au niveau de deux points d'appui (212, 213) du logement de pompe, lesdits points d'appui étant situés à une distance l'un de l'autre.

19. Irrigateur buccal selon la revendication 18, **caractérisé en ce qu'**au moins un des points d'appui (212, 213) est situé dans une zone d'extrémité de la trajectoire de déplacement du piston (205) dans le logement de pompe (202).

20. Irrigateur buccal selon l'une des revendications 18 ou 19, **caractérisé en ce que** le maneton (220) est monté rotatif dans un coulisseau (208) ou un patin, et le coulisseau (208) ou le patin est situé dans un guide de glissement (207) attaché au piston (205) de façon à être mobile transversalement à la direction de mouvement du piston (205), le coulisseau (208) ou patin ayant de préférence une coupe transversale cylindrique et le guide de glissement (207) étant façonné en tant que perçage (217) ayant une coupe transversale correspondant dans une partie qui est de préférence fixée d'une façon stationnaire au piston.

21. Irrigateur buccal selon la revendication 20, **caractérisé en ce qu'**un trou oblong (221) à travers lequel le maneton (220) passe est façonné dans la paroi du guide de glissement (207), ledit trou ayant une largeur plus grande que le diamètre du maneton (220), le maneton (220) étant de préférence monté rotatif dans le coulisseau (208) dans un palier (219) qui est installé dans un perçage (118) du coulisseau (208), et/ou le piston (205) étant situé de façon à pouvoir être tourné autour de son axe longitudinal (H) et/ou le coulisseau (208) étant situé de façon à pouvoir être tourné autour de son axe longitudinal (V).

22. Buse de pulvérisation pour produire un jet de liquide pour un irrigateur buccal selon l'une des revendications précédentes, ayant un corps de buse qui a une chambre dans laquelle s'ouvre un conduit de liquide pour amener un liquide de nettoyage sous pression, et duquel une sortie de buse sort pour l'émission d'un jet de liquide de nettoyage, la chambre étant attachée à une chambre à turbulence ayant une coupe transversale approximativement ronde afin de produire un courant circulant du liquide de nettoyage, la sortie de buse sortant de façon centrale de ladite chambre à turbulence, ladite sortie de buse étant constituée d'un point étroit et d'une expansion, la sortie de buse étant de préférence façonnée dans un attachement de buse situé sur le corps de buse, **caractérisé par** une configuration telle que le liquide de nettoyage est fourni à la buse de pulvérisation avec une pression d'au moins approximativement 15 bar, de sorte que la sortie de buse produit un jet de liquide à vitesse élevée constitué de gouttes microfines du liquide de nettoyage qui est émis.

23. Buse de pulvérisation selon la revendication 22, **caractérisé en ce que** l'expansion est un cône creux ou une surface de cône (19).

24. Buse de pulvérisation selon la revendication 22 ou 23, **caractérisée en ce que** des ouvertures (14) s'ouvrent dans la chambre à turbulence (15) de façon approximativement transversale et avec un centre décalé (x) par rapport à l'axe longitudinal de la chambre à turbulence (15), le jet de liquide émis des ouvertures (14) frappant la paroi opposée de la chambre à turbulence (15) selon un angle d'au plus 45°.

25. Buse de pulvérisation selon l'une des revendications 22 à 24, **caractérisée en ce que** sur un côté cylindrique externe d'une -- de préférence première -- partie en forme de bocal (8), des rainures (12) qui s'étendent en sens axial mènent de la chambre (6) aux ouvertures (14).

26. Buse de pulvérisation selon la revendication 25, **caractérisée en ce que** la pièce de pression (7) a sur son autre extrémité une deuxième partie en forme de bocal (10) dont l'intérieur est attaché au conduit de liquide (5) et à la chambre (6), un intérieur de la deuxième partie en forme de bocal (10) étant en particulier attaché à la chambre (6) via au moins une ouverture, de préférence 3 à 4 ouvertures, chaque ouverture étant façonnée en tant qu'encoche axiale (11).

27. Buse de pulvérisation selon l'une des revendications 22 à 26, **caractérisée en ce qu'**une pièce de pression (7) est accouplée par serrage dans la chambre (6) d'une manière élastique en sens axial, et est en particulier constituée d'un matériau élastique, les zones de la deuxième partie en forme de bocal (10) formée par les encoches (11) formant de préférence des bras de ressort (21).

28. Système de nettoyage pour les dents constitué d'un irrigateur buccal et/ou d'une buse de pulvérisation selon l'une des revendications précédentes, **caractérisé par** deux fonctions d'utilisation, à savoir une fonction haute pression destinée à retirer la plaque et une fonction d'irrigation buccale ayant une plus basse pression.

29. Système de nettoyage pour les dents, irrigateur buccal, ou buse de pulvérisation selon l'une des revendications précédentes, **caractérisé par** un attachement de brosse, de préférence un anneau de brosse, qui est attaché à la buse de pulvérisation ou fabriqué de façon à pouvoir y être attaché.
